# EUROPEAN PATENT SPECIFICATION

(11) **EP 3 739 034 B1**
(45) Date of publication and mention of the grant of the patent: **24.07.2024**
(21) Application number: 20174362.2
(22) Date of filing: 13.05.2020
(51) Int. Cl.: C12C 13/10, C12C 11/00

(54) **FERMENTATION AND AGING APPARATUS**
FERMENTIERUNGS- UND ALTERUNGSVORRICHTUNG
APPAREIL DE FERMENTATION ET DE VIEILLISSEMENT

(30) Priority: 13.05.2019 KR 20190055927
(43) Date of publication of application: 18.11.2020
(73) Proprietor: LG Electronics Inc., SEOUL, 07336 (KR)
(72) Inventor: Kim, Kyeongbo, 08592 Seoul (KR); Yeo, Junki, 08592 Seoul (KR)
(74) Representative: Ter Meer Steinmeister & Partner

(56) References cited:
- EP-A1- 3 246 385
- WO-A2-2019/054826
- US-A1- 2017 335 258

## Description

### BACKGROUND

### 1. Field

A fermentation and aging apparatus is disclosed herein.

### 2. Background

Beverages are collectively referred to as drinkable liquids, such as alcohol or tea. For example, beverages may be divided into various categories, such as water (a beverage) for quenching thirst, juice beverages with a unique flavor and taste, refreshing beverages giving a refreshing sensation, favorite beverages with a stimulant effect, or alcoholic beverages with an alcohol effect.

A representative example of such a beverage is beer. Beer is an alcoholic beverage produced by making juice of malt, which is made by sprouting barley, filtering the juice, adding hop, and fermenting yeast.

Consumers may purchase ready-made products made and sold by a beer maker or may make beer at home (hereinafter "homemade" beer) produced by directly fermenting beer ingredients at home or in a bar. Homemade beer may be made in a variety of types rather than ready-made products and may be made to better suit a consumer's taste.

The ingredients for making beer may include water, liquid malt, hop, yeast, and a flavoring additive, for example. Leaven, which is called yeast, may be added to liquid malt to ferment the liquid malt and assist production of alcohol and carbonic acid. Flavor additives are additives that enhance the taste of beer, such as fruit, syrup, and vanilla beans, for example.

Generally, homemade beer may include three stages or operations, namely, a wort stage or operation, a fermentation stage or operation, and an aging stage of operation, and it may take about two to three weeks from the wort stage or operation to the aging stage or operation. Maintaining an optimum temperature during the fermentation operation is important for homemade beer, and the easier the beer is to make, the more user convenience is improved.

Recently, a fermentation and aging apparatus capable of easily making a beer-like beverage at home or in a bar has been gradually used. Such a fermentation and aging apparatus is configured to be convenient.
US 2017/335258 A1 presents an apparatus that includes a fermentation tank assembly including a fermentation tank having an opening formed therein and a fermentation tank cover configured to open and close the opening. The apparatus also includes an ingredient receiving portion configured to receive, through the opening of the fermentation tank, fermentation ingredients; a gas extraction flow path connected to the fermentation tank; a gas release valve disposed in the gas extraction flow path and configured to discharge gas from the fermentation tank; and a pressure sensor disposed on at least one of the gas extraction flow path or the fermentation tank cover.
EP 3 246 385 A1 presents a beer maker that includes: a fermentation tank having an opening formed therein; a fermentation tank assembly having a fermentation tank cover that opens/closes the opening; a refrigeration cycle apparatus including a compressor, a condenser, an expansion device, and an evaporator, through which a refrigerant is circulated, the refrigeration cycle apparatus controlling a temperature of the fermentation tank as the evaporator is disposed at the fermentation tank; and a heat insulating wall surrounding the fermentation tank and the evaporator together. Accordingly, beer can be fermented at an optimum fermentation temperature in the fermentation tank assembly, and a temperature of fermentation tank can be maintained while protecting the fermentation tank and the evaporator through a simple structure.
WO 2019/054826 A2 presents a beer-making device that comprises: a chamber; a keg containing wort and mounted in the chamber; a keg cap integrated with a yeast capsule, which closes the inside of the keg by being coupled to the keg and is provided with a wort discharge passage for discharging the wort contained in the keg, a gas discharge passage for discharging a gas inside the keg, and a wort hose coupled to a lower portion of the wort discharge passage and extended to the inner bottom surface of the keg, and in which a yeast capsule, containing yeast to be supplied to the wort contained in the keg, is mounted to the wort discharge passage; a coupler which is fixedly installed in the chamber, and is provided with a wort passage connected to the wort discharge passage when the keg cap is coupled, and a gas passage connected to the gas discharge passage when the keg cap is coupled; a passage unit for connecting the wort passage and the gas passage of the coupler; a pump connected to the passage unit; and a control unit for controlling the operation of the pump so that the yeast contained in the yeast capsule is supplied to the wort contained in the keg.

### SUMMARY OF THE INVENTION

It is an object of the present invention to provide a fermentation and aging apparatus and a method for controlling the same, capable of effectively providing ingredients, e.g. additives, from an ingredient accommodator into a fermentation container.
flow path connected to the fermentation tank; a gas release valve disposed in the gas extraction flow path and configured to discharge gas from the fermentation tank; and a pressure sensor disposed on at least one of the gas extraction flow path or the fermentation tank cover.
EP 3 246 385 A1 presents a beer maker that includes: a fermentation tank having an opening formed therein; a fermentation tank assembly having a fermentation tank cover that opens/closes the opening; a refrigeration cycle apparatus including a compressor, a condenser, an expansion device, and an evaporator, through which a refrigerant is circulated, the refrigeration cycle apparatus controlling a temperature of the fermentation tank as the evaporator is disposed at the fermentation tank; and a heat insulating wall surrounding the fermentation tank and the evaporator together. Accordingly, beer can be fermented at an optimum fermentation temperature in the fermentation tank assembly, and a temperature of fermentation tank can be maintained while protecting the fermentation tank and the evaporator through a simple structure.
WO 2019/054826 A2 presents a beer-making device that comprises: a chamber; a keg containing wort and mounted in the chamber; a keg cap integrated with a yeast capsule, which closes the inside of the keg by being coupled to the keg and is provided with a wort discharge passage for discharging the wort contained in the keg, a gas discharge passage for discharging a gas inside the keg, and a wort hose coupled to a lower portion of the wort discharge passage and extended to the inner bottom surface of the keg, and in which a yeast capsule, containing yeast to be supplied to the wort contained in the keg, is mounted to the wort discharge passage; a coupler which is fixedly installed in the chamber, and is provided with a wort passage connected to the wort discharge passage when the keg cap is coupled, and a gas passage connected to the gas discharge passage when the keg cap is coupled; a passage unit for connecting the wort passage and the gas passage of the coupler; a pump connected to the passage unit; and a control unit for controlling the operation of the pump so that the yeast contained in the yeast capsule is supplied to the wort contained in the keg.

### SUMMARY OF THE INVENTION

It is an object of the present invention to provide a fermentation and aging apparatus and a method for controlling the same, capable of effectively providing ingredients, e.g. additives, from an ingredient accommodator into a fermentation container.

The objects are solved by the features of the independent claims. The invention is set out in the appended set of claims.

According to one embodiment, a fermentation and aging apparatus comprises: a tank in which a fluid is accommodated; a fermentation container forming a space in which a beverage is made; an ingredient accommodator disposed between the tank and the fermentation container and having at least a portion of ingredients for making the beverage accommodated therein; a pump disposed in a first channel between the tank and the ingredient accommodator; and a controller configured to control the pump such that the portion of ingredients accommodated in the ingredient accommodator are introduced into the fermentation container while the beverage is made. The controller is further configured to control the pump according to: a primary water supply operation of turning on the pump to introduce the fluid accommodated in the tank into the ingredient accommodator and to introduce the fluid and the portion of ingredients in the ingredient accommodator into the fermentation container, an operation of turning off the pump during a predetermined idle period, and a secondary fluid supply operation of turning on the pump to introduce the fluid accommodated in the tank into the ingredient accommodator and to introduce the ingredients remaining in the ingredient accommodator and the fluid into the fermentation container. The ingredient accommodator may also be denoted as ingredient receiver. The idle period may also be denoted as idle time.

According to a further embodiment, a fermentation and aging apparatus comprises: a tank for accommodating fluid; a fermentation container forming a space for making a beverage; an ingredient accommodator for accommodating ingredients (i.e. at least one ingredient container) for making the beverage, the ingredient accommodator being connected to the tank and to the fermentation container; a pump disposed in a first channel connecting the tank to the ingredient accommodator; and a controller configured to control the apparatus according to any one of the herein described embodiments of a control method. The controller is configured to control the pump. In particular the controller is configured to turn on the pump in a primary water supply operation for introducing fluid of the tank into the ingredient accommodator and for introducing the fluid together with ingredients into the fermentation container, to turn off the pump for a predetermined idle period, and to turn on the pump in a secondary fluid supply operation for introducing fluid of the tank into the ingredient accommodator and for introducing the fluid together with ingredients remaining in the ingredient accommodator into the fermentation container.

The embodiments may include one or more of the following preferred features:

The fermentation and aging apparatus may further comprise a flow meter disposed in the first channel. The controller may be configured to calculate an amount of supplied fluid based on a flow rate detected by the flow meter during the primary fluid supply operation, and to turn off the pump when the calculated amount of supplied fluid reaches a predetermined primary fluid supply amount. The controller may be configured to calculate the amount of supplied fluid based on a flow rate detected by the flow meter during the secondary fluid supply operation, and to turn off the pump when the calculated amount of supplied fluid reaches a predetermined secondary fluid supply amount.

The secondary fluid supply amount may be equal to or greater than the primary fluid supply amount.

The controller may be configured: to measure a fluid supply time using a timer during the primary fluid supply operation and to turn off the pump when the measured fluid supply time reaches a predetermined primary fluid supply time.

The controller may be configured: to measure a fluid supply time using the timer during the secondary fluid supply operation and to turn off the pump when the measured fluid supply time reaches a predetermined secondary fluid supply time.

The secondary fluid supply time may be equal to or greater than the primary fluid supply time.

The idle period may be 10 minutes or more.

The fermentation and aging apparatus may further comprise a flow rate control valve disposed in the first channel. The controller may be configured to repeatedly control a degree of opening of the flow rate control valve to a first level and a second level. That is, the controller may be configured to repeatedly switch a degree of opening of the flow rate control valve between a first level and a second level in order to generate a pulsating flow through the ingredient accommodator.

The fermentation and aging apparatus further comprises a main valve disposed in a second channel between the ingredient accommodator and the fermentation container. The controller is configured: to open the main valve during the first fluid supply operation and the second fluid supply operation, and to close the main valve during the idle period.

The ingredient accommodator may be provided in plurality, i.e. in order to accommodate a plurality of different ingredient containers. The ingredient accommodators may be connected to each other in series such that fluid sequentially flows through the ingredient accommodators.

At least one ingredient container may be accommodated in the ingredient accommodator. Each of the portion of ingredients may be accommodated in at least one ingredient container to be separated from each other.

An object to be fermented may be accommodated in the fermentation container.

The portion of ingredients accommodated in the ingredient accommodator may include a fermentation accelerator.

The idle period may be between 10 and 20 minutes.

The idle period may be based on a type of beverage being made.

A plurality of ingredient containers may be accommodated in the ingredient accommodator. Different ingredients of the ingredients may be accommodated, respectively, in the plurality of containers to be separated from each other.

According to a further embodiment, a method for controlling a fermentation and aging apparatus is provided, comprising: a primary water supply operation of introducing fluid of a tank into an ingredient accommodator and introducing the fluid together with ingredients into a fermentation container, stopping introducing of fluid into the ingredient accommodator for a predetermined idle period, and a secondary fluid supply operation for again introducing fluid of the tank into the ingredient accommodator and for introducing the fluid together with ingredients remaining in the ingredient accommodator into the fermentation container. The fermentation and aging apparatus includes a tank accommodating fluid, an ingredient accommodator accommodating ingredients for making a beverage and a fermentation container forming a space for making the beverage. The fermentation and aging apparatus may be one according to any of the herein described embodiments.

For introducing fluid in the primary and/or secondary water supply operation, a pump disposed in a first channel connecting the tank to the ingredient accommodator is operated, i.e. turned on. Stopping introducing of fluid into the ingredient accommodator includes stopping operation of the pump and closing a main valve disposed in a second channel connecting the ingredient accommodator to the fermentation container.

The method may further comprise: calculating an amount of fluid supplied in the primary water supply operation based on a flow rate detected during the primary fluid supply operation, and stopping introducing of fluid into the ingredient accommodator when the calculated amount of the supplied fluid equals or exceeds a predetermined primary fluid supply amount, and/or calculating the amount of fluid supplied in the secondary fluid supply operation based on a flow rate detected during the secondary fluid supply operation, and stopping introducing of fluid into the ingredient accommodator when the calculated amount of supplied fluid equals or exceeds a predetermined secondary fluid supply amount.

Introducing of fluid into the ingredient accommodator may be stopped, when a measured primary fluid supply time reaches a predetermined primary fluid supply time and/or when a measured secondary fluid supply time reaches a predetermined secondary fluid supply time.

The predetermined secondary fluid supply time may be equal to or greater than the predetermined primary fluid supply time.

The method may further comprise: generating a pulsating fluid flow through the ingredient accommodator during the first fluid supply operation and/or during the second fluid supply operation. For generating the pulsating fluid flow, the pump may be intermittently operated or operated at different levels. Alternatively, for generating the pulsating fluid flow, a flow rate control valve may be repeatedly switched between a first and a second level.

### BRIEF DESCRIPTION OF THE DRAWINGS

Embodiments will be described in detail with reference to the following drawings in which like reference numerals refer to like elements, and wherein:
FIG. 1 is a schematic view of a fermentation and aging apparatus according to an embodiment;
FIG. 2 is a flowchart of a method for controlling a fermentation and aging apparatus according to an embodiment;
FIG. 3 is a schematic block diagram for controlling a fermentation and aging apparatus according to an embodiment;
FIG. 4 is a flowchart of a control operation of a fermentation and aging apparatus according to an embodiment;
FIGs. 5 to 9 are views showing examples related to the control operation of the fermentation and aging apparatus shown in FIG. 4;
FIG. 10 is a graph showing change in flow rate during an additive introducing operation according to the embodiments of FIGs. 4 to 9; and
FIGs. 11A to 13B are views showing experimental data showing an extraction rate according to a type of fermentation accelerator and an idle period in relation to the control operation of FIG. 4.

### DETAILED DESCRIPTION

Hereinafter, embodiments are described with reference to drawings. Wherever possible, like or the same reference numerals have been used to indicate like or the same elements, and repetitive disclosure has been omitted.

Although beer is exemplified as a beverage that is made using a fermentation and aging apparatus according to embodiments, the kind of beverage that can be made using the fermentation and aging apparatus is not limited to beer and various kinds of beverages may be made using the fermentation and aging apparatus according to embodiments.

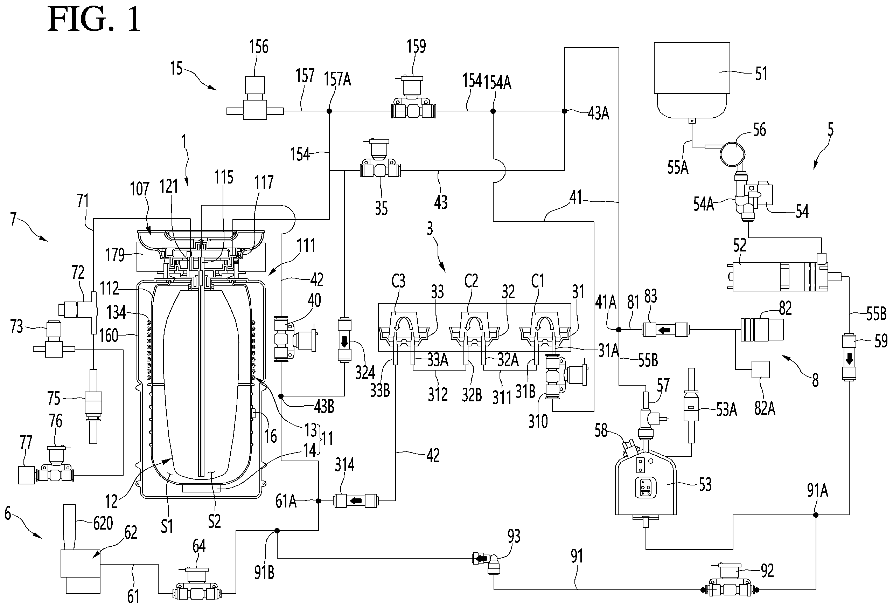

FIG. 1 is a schematic view of a fermentation and aging apparatus according to an embodiment. The fermentation and aging apparatus includes a fermentation module 1. A beverage may be fermented in the fermentation module 1. The fermentation and aging apparatus may include a temperature controller that controls an inner temperature of the fermentation module 1.

The fermentation and aging apparatus includes a fluid supply module 5. The fluid supply module 5 may supply a fluid, such as water.

The fermentation and aging apparatus includes an ingredient supplier 3 provided with ingredient accommodators 31, 32, and 33 in which ingredients required for making a beverage may be accommodated. The fermentation and aging apparatus includes main channels 41 and 42 that connect the fluid supply module 5 to the fermentation module 1.

The fermentation and aging apparatus may include a beverage dispenser 6 that dispenses the beverage made in the fermentation module 1 to the outside. The beverage dispenser 6 may be connected to second main channel 42. Thus, the beverage dispensed from the fermentation module 1 may be guided to the beverage dispenser 6 by passing through a portion of the second main channel 42.

The fermentation and aging apparatus may further include a gas discharger 7. The gas discharger 7 may be connected to the fermentation module 1 to discharge a gas generated while the beverage is made.

The fermentation and aging apparatus may further include an air injector 8 that injects air. The air injector 8 may be connected to the fluid supply module 5 or first main channel 41. The air injector 8 may include an air pump 82.

The fermentation and aging apparatus may further include an air controller 15 that controls a pressure between an inner wall of a fermentation tank 112 and an outer surface of a fermentation container 12. The fermentation and aging apparatus may further include a sub channel 91. The sub channel 91 may connect the fluid supply module 5 to the beverage dispenser 6.

The fermentation module 1 may include a fermentation tank module 111 having an opening, and a fermentation lid 107 that opens and closes the opening. The fermentation tank module 111 may include a fermentation case 160 and fermentation tank 112 accommodated in the fermentation case 160 and having an inner space S1. Insulation (not shown) may be provided between the fermentation case 160 and the fermentation tank 112. The fermentation tank module 111 may further include a lid seating body 179 on which the fermentation lid 107 may be seated.

Each of the fermentation case 160 and the fermentation tank 112 may be provided as an assembly of a plurality of members or components. The fermentation case 160 may define an outer appearance of the fermentation tank module 111.

The fermentation lid 107 may seal an inside of the fermentation tank module 111 and be disposed on the fermentation tank module 111 to cover the opening. A main channel, more particularly, a main channel connecting portion 115 connected to the second main channel 42 may be provided in the fermentation lid 107.

A fermentation container 12 may be accommodated in the fermentation tank 112. The fermentation container 12 may be provided as a separate container so that beverage ingredients and a finished beverage do not stain the inner wall of the fermentation tank 112. The fermentation container 12 may be separably disposed on or in the fermentation tank 112. The fermentation container 12 may be seated on or in the fermentation tank 112 to ferment the beverage within the fermentation tank 112. After the fermentation container 12 is used, the fermentation container 12 may be removed from the fermentation tank 112.

The fermentation container 12 may be a pack containing ingredients (ingredients to be fermented) for making a beverage. The fermentation container 12 may be made of a flexible material. Thus, the fermentation container 12 may be easily inserted into the fermentation tank 112 and be contracted and expanded by a pressure. However, embodiments are not limited thereto. For example, the fermentation container 12 may be made of a PET material.

The fermentation container 12 has a beverage-making space S2 in which beverage ingredients may be accommodated, and the beverage made. The fermentation container 12 may have a size less than a size of inner space S1 of the fermentation tank 112.

The fermentation container 12 may be inserted into and accommodated in the fermentation tank 112 in a state in which the ingredients are contained in the fermentation container 12. The fermentation container 12 may be inserted into the fermentation tank 112 and then accommodated in the fermentation tank 112 in a state in which the fermentation lid 107 is opened.

The fermentation lid 107 may seal the fermentation tank 112 after the fermentation container 12 is inserted into the fermentation tank 112. The fermentation container 12 may assist fermentation of the ingredients in a state in which the fermentation container 12 is accommodated in the inner space S1 sealed by the fermentation container 112 and the fermentation lid 107. The fermentation container 12 may be expanded by pressure therein during the making of the beverage. The fermentation container 12 may be pressed by air within the fermentation tank 112 when the beverage contained in the fermentation container 12 is dispensed, and the air may be supplied between the inner surface of the fermentation tank 112 and the fermentation container 12.

The fermentation tank 112 may be disposed in the fermentation case 160. The fermentation tank 112 may have an outer circumferential surface and an outer bottom surface, which may be spaced apart from an inner surface of the fermentation case 160. The outer circumferential surface of the fermentation tank 112 may be spaced apart from an inner circumference of the fermentation case 160, and the outer bottom surface of the fermentation tank 112 may be spaced apart from an inner bottom surface of the fermentation case 160.

The insulation (not shown) may be provided between the fermentation case 160 and the fermentation tank 112. The insulation may be disposed in the fermentation case 160 to surround the fermentation tank 112. Thus, a temperature of the fermentation tank 112 may be maintained constant. The insulation may be made of a material, such as foamed polystyrene or polyurethane, which has a high thermal insulating performance and absorbs vibration.

The fermentation tank 112 may include a temperature sensor 16 that measures a temperature of the fermentation tank 112. The temperature sensor 16 may be mounted on the outer circumferential surface of the fermentation tank 112. The temperature sensor 16 may be disposed below an evaporator 134 wound around the fermentation tank 112.

A temperature controller 11 may change an inner temperature of the fermentation tank module 111. The temperature controller 11 may change a temperature of the fermentation tank 112. The temperature controller 11 may heat or cool the fermentation tank 112 to control a temperature of the fermentation tank 112 at an optimal temperature for fermenting the beverage.

The temperature controller 11 may include at least one of a refrigerant cycle device 13 and/or a heater 14. However, embodiments are not limited thereto. For example, the temperature controller 11 may include a thermoelement (TEM).

The refrigerant cycle device 13 may control the temperature of the fermentation tank 112 to cool the temperature of the fermentation tank 112. The refrigerant cycle device 13 may include a compressor, a condenser, an expansion mechanism, and the evaporator 134.

The evaporator 134 may contact the outer circumferential surface of the fermentation tank 112. The evaporator 134 may be provided as an evaporation tube wound around the outer circumferential surface of the fermentation tank 112. The evaporator 134 may be accommodated between the fermentation tank 112 and the insulation to cool the fermentation tank 112 insulated by the insulation.

The temperature controller 11 may further include heater 14 that heats the fermentation tank 112. The heater 14 may contact the outer bottom surface of the fermentation tank 112. The heater 14 may be provided as a heat generation heater that generates heat when power is applied. The heater 14 may be provided as a plate heater. Thus, natural convection of a fluid may be generated inside of the fermentation tank 112 by the evaporator 134 and the heater 14, and temperature distribution inside of the fermentation tank 112 and the fermentation container 12 may be uniform.

As described above, the main channels 41 and 42 include first main channel 41 that connects the fluid supply module 5 to the ingredient supplier 3 and second main channel 42 that connects the ingredient supplier 3 to the fermentation module 1. That is, the first main channel 41 may guide a fluid, such as water supplied from the fluid supply module 5 to the ingredient supplier 3, and the second main channel 42 may guide a mixture of ingredients and the fluid, which are extracted from the ingredient supplier 3, to the fermentation module 1.

The first main channel 41 may have a first end 41a connected to the fluid supply module 5 and a second end connected to the ingredient supplier 3, more particularly, an inlet 31a of an initial ingredient accommodator 31, which will be described hereinafter.

An ingredient supply valve 310 that opens and closes the first main channel 41 may be installed in the first main channel 41. The ingredient supply valve 310 may be provided in the ingredient supplier 3.

When additives accommodated in the ingredient accommodators 31, 32, and 33 are input, the ingredient supply valve 310 may be opened to open the first main channel 41. The ingredient supply valve 310 may also be opened when the ingredient accommodators 31, 32, and 33 are cleaned to open the first main channel 41.

The second main channel 42 may have a first end connected to the main channel connecting portion 115 of the fermentation module 1 and a second end connected to the ingredient supplier 3, more particularly, an outlet 33b of a final ingredient accommodator 33, which will be described hereinafter.

A main valve 40 that opens and closes the second main channel 42 is installed in the second main channel 42. Also, a main check valve 314 that allows fluid to flow from the ingredient supplier 3 to the fermentation module 1 may be installed in the second main channel 42. That is, the main check valve 314 may prevent the fluid from flowing back to the ingredient supplier 3. The main check valve 314 may be disposed between the main valve 40 and the ingredient supplier 3 with respect to the second main channel 42.

The main valve 40 is opened to open the second main channel 42 when fluid is supplied to the fermentation container 12. The main valve 40 may be closed to close the second main channel 42 while the fermentation tank 112 is cooled. The main valve 40 may be opened to open the second main channel 42 when air is injected into the fermentation container 12. The main valve 40 may be opened to open the second main channel 42 when ingredients are supplied into the fermentation container 1. The main valve 40 may be closed to seal the inside of the fermentation container 12 during fermentation of the ingredients. The main valve 40 may be closed to seal the inside of the fermentation container 12 when the beverage is aged and stored. The main valve 40 may be opened to open the second main channel 42 when the beverage is dispensed by the beverage dispenser 6. The beverage within the fermentation container 1 may pass through the main valve 40 to flow to the beverage dispenser 6.

The main channels 41 and 42 may be provided as one continuous channel when the fermentation and aging apparatus does not include the ingredient supplier 3. When the fermentation and aging apparatus includes the ingredient supplier 3, the fermentation and aging apparatus may further include bypass channel 43 configured to allow fluid or air to bypass the ingredient accommodators 31 and 32.

The bypass channel 43 may bypass the ingredient accommodators 31, 32, and 33 and then be connected to the first main channel 41 and the second main channel 42. The bypass channel 43 may have a first end 43a connected to the first main channel 41 and a second end 43b connected to the second main channel 42. The first end 43a of the bypass channel 43 may be connected to the first main channel 41 between the fluid supply module 5 and the ingredient supply valve 310 and the second end 43b may be connected to the second main channel 42 between the main valve 40 and the ingredient supplier 3.

A bypass valve 35 that opens and closes the bypass channel 43 may be installed in the bypass channel 43. The bypass valve 35 may be opened to open the bypass channel 43 when fluid supplied from the fluid supply module 5 is supplied to the fermentation container 12. The bypass valve 35 may be opened to open the bypass channel 43 when air injected from the air injector 8 is supplied to the fermentation container 12. The bypass valve 35 may be opened to open the bypass channel 43 when the bypass channel 43 is cleaned.

A bypass check valve 324 that allows fluid to flow from the first main channel 41 to the second main channel 42 may be installed in the bypass channel 43. That is, the fluid may flow only from the first main channel 41 to the second main channel 42, but may not flow in the opposite direction. The bypass check valve 324 may be disposed between the bypass valve 35 and the second main channel 42 with respect to the bypass channel 43.

When beverage is made using the fermentation and aging apparatus, ingredients used to make the beverage may include a fluid, such as water, an object to be fermented and an additive, for example, a fermentation accelerator. When beer is made using the fermentation and aging apparatus, ingredients for making the beer may include water, malt, yeast, hop, and flavoring additives, for example. The fermentation and aging apparatus may include all of the ingredient supplier 3 and the fermentation container 12. The ingredients for making the beverage may be accommodated separately in the ingredient supplier 3 and the fermentation container 12. That is, a portion of the ingredients, for example, ingredients to be fermented, for making the beverage may be accommodated in the fermentation container 12, and the remaining ingredients may be accommodated in the ingredient supplier 3. The remaining ingredients accommodated in the ingredient supplier 3 may be supplied to the fermentation container 12 together with the fluid supplied from the fluid supply module 5 and mixed with the portion of the ingredients accommodated in the fermentation container 12.

A main ingredient (ingredients to be fermented) that is essential for making a beverage may be accommodated in the fermentation container 12, and the other ingredients or additives, for example, a fermentation accelerator, added to the main ingredient may be accommodated in the ingredient supplier 3. In this case, the additives accommodated in the ingredient supplier 3 may be mixed with fluid supplied from the fluid supply module 5 and supplied to the fermentation container 12 and then mixed with the main ingredient accommodated in the fermentation container 12.

An amount of the main ingredient accommodated in the fermentation container 12 may be greater than an amount of other ingredients. For example, when beer is made, the main material may be malt of malt, yeast, hop, and flavoring additives. Also, the additive accommodated in the ingredient supplier 3 may be the other ingredients except for the malt of the ingredients for making beer, for example, yeast, hop, and flavoring additives.

The fermentation and aging apparatus may not include the ingredient supplier 3 but may include the fermentation container 12. In this case, the main ingredient may be accommodated in the fermentation container 12, and the user may directly put the additives into the fermentation container 12.

If the fermentation and aging apparatus includes both the ingredient supplier 3 and the fermentation container 12, the beverage may be more easily made. Hereinafter, a case in which the fermentation and aging apparatus includes both the ingredient supplier 3 and the fermentation container 12 will be described as an example.

The ingredients within the fermentation container 12 may be fermented over time, and the beverage made in the fermentation container 12 may flow to the second main channel 42 through the main channel connecting portion 115 and also flow from the second main channel 42 to the beverage dispenser 6 to be dispensed. The ingredients that are necessary for making the beverage may be accommodated in the ingredient supplier 3, and the fluid supplied from the fluid supply module 5 may pass through the ingredient supplier 3. For example, when the beverage made in the fermentation and aging apparatus is beer, the ingredients accommodated in the ingredient supplier 3 may be yeast, hop, and flavoring additives, for example.

The ingredients accommodated in the ingredient supplier 3 may be directly accommodated into the ingredient accommodators 31, 32, and 33 provided in the ingredient supplier 3. At least one ingredient accommodator 31, 32, and 33 may be provided in the ingredient supplier 3. Also, a plurality of ingredient accommodators 31, 32, and 33 may be provided in the ingredient supplier 3. The plurality of ingredient accommodators 31, 32, and 33 may be partitioned with respect to each other.

Inlets 31a, 32a, and 33a, through which the fluid may be introduced, and outlets 31b, 32b, and 33b, through which the fluid may be discharged, may be provided in the ingredient accommodators 31, 32, and 33, respectively. The fluid introduced into the inlet of one ingredient accommodator may be mixed with the ingredients within the ingredient accommodators and then discharged through the outlet.

The ingredients accommodated in the ingredient supplier 3 may be accommodated in ingredient containers C1, C2, and C3. The ingredient containers C1, C2, and C3 may be accommodated in the ingredient accommodators 31, 32, and 33, and each of the ingredient accommodators 31, 32, and 33 may be referred to as an "ingredient container mount". The ingredient containers C1, C2, and C3 may be a capsule, pad or a pod, for example; however, embodiments are not limited thereto.

When the ingredients are accommodated in the ingredient containers C1, C2, and C3, the ingredient supplier 3 may be configured so that the ingredient containers C1, C2, and C3 may be seated therein and withdrawn therefrom. The ingredient supplier 3 may be provided as an ingredient container kit assembly in which the ingredient containers C1, C2, and C3 are separably accommodated.

For example, a first additive, a second additive, and a third additive may be accommodated in the ingredient supplier 3. The first additive may be a fermentation accelerator, for example, yeast, the second additive may be hop, and the third additive may be a flavoring additive. The ingredient supplier 3 may include a first ingredient container mount 31 in which a first ingredient container C1 containing the first additive may be accommodated, a second ingredient container mount 32 in which a second ingredient container C2 containing the second additive may be accommodated, and a third ingredient container mount 33 in which a third ingredient container C3 containing the third additive may be accommodated.

The ingredients contained in the ingredient accommodators or the ingredient containers C1, C2, and C3 may be extracted by a fluid pressure of fluid supplied from the fluid supply module 5. When the ingredients are extracted by the fluid pressure, the fluid supplied from the fluid supply module 5 to the first main channel 41 may pass through the ingredient accommodators or the ingredient containers C1, C2, and C3 and then may be mixed with the ingredients, and the ingredients accommodated in the ingredient accommodators or the ingredient containers C1, C2, and C3 may flow to the second main channel together with the fluid.

A plurality of different additives may be accommodated separately in the ingredient supplier 3. For example, when beer is made, the plurality of additives accommodated in the ingredient supplier 3 may be yeast, hop, and a flavoring additive, which may be accommodated separated from each other.

When the plurality of ingredient accommodators is provided in the ingredient supplier 3, the plurality of ingredient accommodators 31, 32, and 33 may be connected in series to each other in a flow direction of the fluid. That is, the ingredient supplier 3 may include at least one connecting channel 311 and 312 that connects the outlet of one ingredient accommodator of the plurality of ingredient accommodators 31, 32, and 33 to the inlet of another ingredient accommodator.

Also, the plurality of ingredient accommodators 31, 32, and 33 may include an initial ingredient accommodator 31 and a final ingredient accommodator 33. The plurality of ingredient accommodators 31, 32, and 33 may further include an intermediate ingredient accommodator 32.

The inlet 31a of the initial ingredient accommodator 31 may be connected to the first main channel 41, and the outlet 33b of the final ingredient accommodator 33 may be connected to the second main channel 42. The intermediate ingredient accommodator 32 may be disposed between the first ingredient accommodator 31 and the second ingredient accommodator 33 in the flow direction of the fluid. The inlet 32a and the outlet 32b of the intermediate ingredient accommodator 32 may be connected to different connecting channels 311 and 312 from each other.

As illustrated in FIG. 1, when three ingredient accommodators are provided in the ingredient supplier 3, the outlet 31b of the initial ingredient accommodator 31 may be connected to the inlet 32a of the intermediate ingredient accommodator 32 through the first connecting channel 311, and the outlet 32b of the intermediate ingredient accommodator 32 may be connected to the inlet 33a of the final ingredient accommodator 33 through the second connecting channel 312. The fluid introduced into the inlet 31a of the final ingredient accommodator 31 through the first main channel 41 may flow to the first connecting channel 311 through the outlet 31b together with the first additive accommodated in the initial ingredient accommodator 31.

The fluid, which may be a mixture of water and a first additive, introduced into the inlet 32a of the intermediate ingredient accommodator 32 through the first main channel 311 may flow to the second connecting channel 312 through the outlet 32b together with the second additive accommodated in the intermediate ingredient accommodator 32. The fluid, which may now be a mixture of water and first and second additives, introduced into the inlet 33a of the final ingredient accommodator 33 through the second main channel 312 may flow to the second connecting channel 42 through the outlet 33b together with a third additive accommodated in the final ingredient accommodator 33. The fluid, which may now be a mixture of water and first, second, and third additives, discharged through the second main channel 42 may be guided to the main channel connecting portion 115 of the fermentation module 1 and then introduced into the fermentation container 12.

However, the configuration of the ingredient supplier is not limited thereto. For example, when the intermediate ingredient accommodator is not provided, two ingredient accommodators may be provided in the ingredient supplier 3. In this case, one ingredient accommodator may be the initial ingredient accommodator, and the other ingredient accommodator may be the final ingredient accommodator. The outlet of the initial ingredient accommodator and the inlet of the final ingredient accommodator may be connected to each other by the connecting channel.

For another example, when a plurality of the intermediate ingredient accommodator is provided, four or more ingredient accommodators may be provided in the ingredient supplier 3. In this case, one ingredient accommodator may be the initial ingredient accommodator, another ingredient accommodator may be the final ingredient accommodator, and the remaining ingredient accommodators may be intermediate ingredient accommodators. In this case, as the connection between the ingredient accommodators in series is easily understood by a person skilled in the art, detailed descriptions thereof have been omitted.

As the plurality of ingredient accommodators 31, 32, and 33 may be connected in series to each other, the channel configuration of the ingredient supplier 3 may be simplified. Further, as the additives contained in the ingredient containers C1, C2, and C3 may be extracted all at once, a time taken to extract the additives may decrease. Furthermore, as the user does not have to worry about a mounting order of the ingredient containers C1, C2, and C3, malfunction due to the mounting of the ingredient containers C1, C2, and C3 in an erroneous order may not occur. Also, fluid leakage in the ingredient supplier 3 may be minimized to improve reliability.

When the ingredients accommodated in the ingredient supplier 3 are accommodated in the ingredient containers C1, C2, and C3, the initial ingredient accommodator 31 may be referred to as an "initial ingredient container mount", the intermediate ingredient accommodator 32 may be referred to as an "intermediate ingredient container mount", and the final ingredient accommodator 33 may be referred to as a "final ingredient container mount".

That is, the fermentation and aging apparatus utilizes the fermentation container 12 and the ingredient containers C1, C2 and C3, thereby accurately providing the amount of ingredients necessary to make the beverage and providing beverage having uniform quality. In addition, the fermentation container 12 and the ingredient containers C1, C2 and C3 may be easily detached and installed, thereby improving cleanliness outside/inside the apparatus.

The fluid supply module 5 includes a tank 51, a pump 52 that pumps a fluid, such as water within the tank 51, and may include a heater 53 that heats the fluid pumped by the pump 52. The tank 51 and the pump 52 may be connected to a tank discharge channel 55a, and the fluid contained in the tank 51 may be introduced into the pump 52 through the tank discharge channel 55a.

The pump 52 and a first end of the first main channel 41 may be connected to a supply channel 55b, and the fluid discharged from the pump 52 may be guided to the first main channel 41 through the supply channel 55b. A flow meter 56 that measures a flow rate of the fluid discharged from the tank 51 may be installed in the tank discharge channel 55a.

A flow rate control valve 54 that controls a flow rate of the fluid discharged from the tank 51 may be installed in the tank discharge channel 55a. The flow rate control valve 54 may include a step motor.

A thermistor 54a that measures a temperature of the fluid discharged from the tank 51 may be installed in the tank discharge channel 55a. The thermistor 54a may be built into the flow rate control valve 54.

A check valve 59 that prevents the fluid from flowing back to the pump 52 may be installed in the supply channel 55b. Also, the heater 53 may be installed in the supply channel 55b. A thermal fuse 58 that interrupts a circuit to cutoff current applied to the heater 53 when a temperature is high may be installed in the heater 53.

The fluid supply module 5 may further include a safety valve 53a. The safety valve 53a may communicate with an inside of a heater case of the heater 53. The safety valve 53a may restrict a maximum inner pressure of the heater case. For example, the safety valve 53a may restrict the maximum inner pressure of the heater case to a pressure of about 3.0 bar.

The fluid supply module 5 may further include a temperature sensor 57 that measures a temperature of the fluid passing through the heater 53. The temperature sensor 57 may be installed in the heater 53. Alternatively, the temperature sensor 57 may be disposed at a portion of the supply channel 55b behind the heater 53 in the flow direction of fluid. Also, the temperature sensor 57 may be installed in the first main channel 41.

When the pump 52 is driven, the fluid within the tank 51 may be introduced into the pump 52 through the tank discharge channel 55a. The fluid discharged from the pump 52 may be heated in the heater 53 while flowing through the supply channel 55b and then be guided to the first main channel 41.

The beverage dispenser 6 may be connected to the second main channel 42. The beverage dispenser 6 may include a dispenser 62 that dispenses a finished beverage and a beverage dispensing channel 61 that connects to the dispenser 62 to the second main channel 42.

The beverage dispensing channel 61 may have a first end (connecting portion) 61a connected between the main check valve 314 and the main valve 40 with respect to the second main channel 42 and a second end connected to the dispenser 62. A beverage dispensing valve 64 that opens and closes the beverage dispensing channel 61 may be installed in the beverage dispensing channel 61.

The beverage dispensing valve 64 may be opened to open the beverage dispensing channel 61 when the beverage is dispensed. The beverage dispensing valve 64 may be opened to open the beverage dispensing channel 61 when residual fluid is removed. The beverage dispensing valve 64 may be opened to open the beverage dispensing channel 61 when the beverage dispenser is cleaned.

An anti-foaming portion (not shown) may be provided in the beverage dispensing channel 61, and an amount of foam of the beverage flowing from the second main passage 42 to the beverage dispensing channel 61 may be minimized while passing through the anti-foaming portion. A mesh that filters the foam may be provided in the anti-foaming portion (not shown).

When the beverage is dispensed, the beverage dispensing valve 64 may be opened. When the beverage is not dispensed, the beverage dispensing valve 64 may be maintained in a closed state.

The gas discharger 7 may be connected to the fermentation module 1 to discharge gas generated in the fermentation container 12. The gas discharger 7 may include a gas discharge channel 71 connected to the fermentation module 1, a gas pressure sensor 72 installed in the gas discharge channel 71, and a gas discharge valve 73 connected upstream of the gas pressure sensor 72 in the gas discharge channel 71 in a gas discharge direction.

The gas discharge channel 71 may be connected to the fermentation module 1, more particularly, the fermentation lid 107. A gas discharge channel connecting portion 121 to which the gas discharge channel 71 may be connected may be provided in the fermentation lid 107.

Gas within the fermentation container 12 may flow into the gas discharge channel 71 and the gas pressure sensor 72 through the gas discharge channel connecting portion 121. The gas pressure sensor 72 may detect a pressure of the gas discharged to the gas discharge channel 71 through the gas discharge channel connecting portion 121 within the fermentation container 12.

The gas discharge valve 73 may be opened when air is injected into the fermentation container 12 by the air injector 8. The fermentation and aging apparatus may uniformly mix the malt with the fluid by injecting air into the fermentation container 12. Foam generated in the liquid malt may be discharged from an upper portion of the fermentation container 12 to the outside through the gas discharge channel 71 and the gas discharge valve 73. The gas discharge valve 73 may be opened during the fermentation operation and then closed.

The gas discharger 7 may further include a safety valve 75 connected to the gas discharge channel 71. The safety valve 75 may be connected upstream of the gas pressure sensor 72 in the gas discharge channel 71 in the gas discharge direction. The safety valve 75 may restrict a maximum pressure of the fermentation container 12 and the gas discharge channel 71. For example, the safety valve 75 may restrict the maximum pressure of the fermentation container 12 and the gas discharge channel 71 to a pressure of about 3.0 bar.

The gas discharger 7 may further include a pressure release valve 76. The pressure release valve 76 may be connected to the gas discharge channel 71. The pressure release valve 76 and the gas discharge valve 73 may be selectively opened/closed. The gas discharge channel 71 may be branched to be respectively connected to the gas discharge valve 73 and the pressure release valve 76.

A noise reducing device 77 may be mounted on the pressure release valve 76. The noise reducing device 77 may include at least one of an orifice structure or a muffler structure, for example.

Even though the pressure release valve 76 is opened, an inner pressure of the fermentation container 12 may gradually decrease due to the noise reducing device 77. When fermentation of the beverage progresses, the pressure release valve 76 may be opened to release the pressure in a state in which the inner pressure of the fermentation container 12 increases. The noise reducing device 77 may effectively reduce noise generated due to a difference in pressure between the inside and outside of the fermentation container 12. The pressure release valve 76 may be open/close-controlled in a fermentation operation with relatively high internal pressure. That is, the fermentation and aging apparatus may effectively discharge unnecessary gas generated in the fermentation operation through the gas discharger 7.

The air injector 8 may be connected to the supply channel 55b or the first main channel 41 to inject air. Hereinafter, for convenience of description, a case in which the air injector 8 is connected to the supply channel 55b will be described as an example.

The air injector 8 may be connected to an opposite side of sub channel 91, which will be described hereinafter, with respect to the heater 53. The air injected by the air injector 8 may pass through the heater 53 to flow to the sub channel 91 together with residual fluid within the heater 53. Thus, residual fluid within the heater 53 may be removed to maintain a clean state of the heater 53.

Alternatively, air injected from the air injector 8 to the first main channel 41 may successively pass through the bypass channel 43 and the second main channel 42 and then be injected into the fermentation container 12. Thus, stirring or aeration may be performed in the fermentation container 12.

Alternatively, air injected from the air injector 8 to the first main channel 41 may be guided to the ingredient supplier 3 to flow to the ingredient container mounts 31, 32, and 33. Residual fluid or residue within the ingredient containers C1, C2, and C3 or the ingredient container mounts 31, 32, and 33 may flow to the second main channel 42 due to air injected by the air injector 8. The ingredient containers C1, C2, and C3 and the ingredient container mounts 31, 32, and 33 may be cleanly maintained by the air injected by the air injector 8.

The air injector 8 may include an air injection channel 81 connected to the supply channel 55b or the first main channel 41 and an air pump 82 connected to the air injection channel 81. The air pump 82 may pump air to the air injection channel 81. An air injection check valve 83 that prevents fluid flowing to the supply channel 55b by the pump 52 from being introduced into the air pump 82 through the air injection channel 81 may be installed in the air injection channel 81.

The air injector 8 may further include an air filter 82a. The air filter 82a may be provided in a suction portion of the air pump 82, and thus, external air may be suctioned into the air pump 82 by passing through the air filter 82a. Thus, the air pump 82 may inject clean air into the air injection channel 81. That is, as the fermentation and aging apparatus includes the air injector 8, it is possible to smoothly supply air necessary for growing microorganisms during the fermentation operation of the beverage.

The air controller 15 may control a pressure between the inner wall of the fermentation tank 112 and the outer surface of the fermentation container 12. The air controller 15 may supply air into a space between the fermentation container 12 and the fermentation tank 112. On the other hand, the air controller 15 may exhaust the air within the space between the fermentation container 12 and the fermentation tank 112 to the outside.

The air controller 15 may include an air supply channel 154 connected to the fermentation module 1, and an exhaust channel 157 connected to the air supply channel 154 to exhaust the air to the outside. The air supply channel 154 may have a first end connected to the first main channel 41 and a second end connected to the fermentation module 1.

The air supply channel 154 may be connected to the fermentation module 1, more particularly, the fermentation lid 107. An air supply channel connecting portion 117 to which the air supply channel 154 may be connected may be provided in the fermentation module 1. The air supply channel connecting portion 117 may communicate with the space between the inner wall of the fermentation tank 112 and the outer surface of the fermentation container 12.

The air injected from the air injector 8 to the first main channel 41 may be guided between the outer surface of the fermentation container 12 and the inner wall of the fermentation tank 112 through the air supply channel 154. The air injector 8 may function as an air supplier that supplies air into the space between the fermentation container 12 and the fermentation tank 112 together with the air supply channel 154.

As described above, the air supplied into the fermentation tank 112 may press the fermentation container 12 between the outer surface of the fermentation container 12 and the inner wall of the fermentation tank 112. The beverage within the fermentation container 12 may be pressed by the fermentation container 12 pressed by the air. When the main valve 40 and the beverage dispensing valve 64 are opened, the beverage may pass through the main channel connecting portion 115 to flow to the second main channel 42. The beverage flowing from the fermentation container 12 to the second main channel 42 may be dispensed to the outside through the beverage dispenser 6.

The air pump 82 may supply air so that a predetermined pressure occurs between the fermentation container 12 and the fermentation tank 112. Thus, a pressure at which the beverage within the fermentation container 12 is easily dispensed may occur between the fermentation container 12 and the fermentation tank 112.

The air pump 82 may be maintained in an off state while the beverage is dispensed. When the beverage is completely dispensed, the air pump 82 may be driven for a next beverage dispensing and then stopped.

Thus, when the beverage is finished, the fermentation and aging apparatus may dispense the beverage within the fermentation container 12 to the beverage dispenser 6 in a state in which the fermentation container 1 is disposed within the fermentation module 1 without withdrawing the fermentation container 12 to the outside of the fermentation module 1.

The air controller 15 may include a separate air supply pump with respect to the air injector 8. In this case, the air supply channel 154 may be connected to the air supply pump, but may not be connected to the first main channel 41. However, injection of air into the fermentation container 12 by the air pump 82 and the supplying of air into the space between the fermentation container 12 and the fermentation tank 112 may be combined with each other to realize a compact product and reduce manufacturing costs.

The exhaust channel 157 may function as an air exhaust passage, through which the air between the fermentation container 12 and the fermentation tank 112 may be exhausted to the outside, together with a portion of the air supply channel 154. The exhaust channel 157 may be disposed outside of the fermentation module 1. The exhaust channel 157 may be connected to a portion of the air supply channel 154, which is disposed outside of the fermentation tank 112.

The air supply channel 154 may include a first channel connected between a connecting portion 157a connected to the first main channel 41 and the exhaust channel 157 and a second channel connected between the connecting portion 154a connected to the exhaust channel 157 and the air supply channel connecting portion 117. The first channel may be an air supply channel that guides the air pumped by the air pump 82 to the second channel. Also, the second channel may be an air supply and exhaust-combined channel that supplies the air passing through the air supply channel into the space between the fermentation tank 112 and the fermentation container 12 or guides the air discharged from the space between the fermentation tank 112 and the fermentation container 12 the connecting channel 157.

The exhaust channel 157 may be connected to an exhaust valve 156 that opens and closes the exhaust channel 157. The exhaust valve 156 may be opened so that the air between the fermentation container 12 and the fermentation tank 112 may be exhausted to the outside when the fermentation container 12 is expanded while the beverage is made. The exhaust valve 156 may be opened when the fluid is supplied by the fluid supply module 5. The exhaust valve 156 may be opened when the air is injected by the air injector 8.

The exhaust valve 156 may be opened so that the air between the fermentation container 12 and the fermentation tank 112 may be exhausted when the beverage within the fermentation container 12 is completely dispensed. The user may take the fermentation container 12 out of the fermentation tank 112 when the beverage is completely dispensed. This is done because safety accidents occur when the inside of the fermentation tank 112 is maintained at a high pressure. The exhaust valve 156 may be opened when the beverage within the fermentation container 12 is completely dispensed.

The air controller 15 may further include an air supply valve 159 that restricts the air pumped by the air pump 82 and supplied between the fermentation container 12 and the fermentation tank 112. The air supply valve 159 may be installed in the air supply channel 154. That is, the air supply valve 159 may be installed between the connecting portion 154a of the first main channel 41 and the connecting portion 157a of the exhaust channel 157 in the air supply channel 154.

The sub channel 91 may connect the fluid supply module 5 to the beverage dispenser 6. That is, the sub channel 91 may have a first end 91a connected to the supply channel 55b and a second end 91b connected to the beverage dispensing channel 61.

The sub channel 91 may be connected between the pump 52 and the heater 53 with respect to the supply channel 55b. Also, the sub channel 91 may be connected to the connecting portion 61a of the second main channel 42 and the beverage dispensing valve 64 with respect to the beverage dispensing channel 61.

The fluid supplied by the pump 52 and the air pumped by the air pump 82 may be guided to the beverage dispensing channel 61 through the sub channel 91 and then may be dispensed to the dispenser 62. Thus, residual fluid or beverage remaining in the beverage dispenser 6 may be removed.

A sub valve 92 that opens and closes the sub channel 91 may be installed in the sub channel 91. The sub valve 92 may be opened to open the sub channel 91 when the beverage is dispensed, or cleaning is performed.

A sub check valve 93 that prevents the beverage in the beverage dispensing channel 61 from flowing back to the fluid supply module 5 may be installed in the sub channel 91. The sub check valve 93 may be disposed between the sub valve 92 and the beverage dispensing channel 61 with respect to the sub channel 91.

The sub channel 91 may function as a residual fluid removing channel of the fluid supply module 5. For example, when the air pump 82 is turned on in a state in which the air supply valve 159, the bypass valve 35, and the ingredient supply valve 310 are closed, the sub valve 92 is opened, and the air injected into the air injection channel 81 may pass through the heater 53 to flow to the sub channel 91. Then, the air may pass through the sub valve 92 to flow to the beverage dispensing channel 61 and then be dispensed to the dispenser 62. In this operation, the air may be dispensed together with fluid from the fluid supply module 5, more particularly, the residual fluid remaining in the heater 53 and the supply channel 55b so that residual fluid may be removed.

In addition, the sub channel 91 may function as a cleaning channel. That is, a beverage may be partially dispensed by the dispenser 62, and when a long period of time has elapsed before a next beverage dispensing, fluid may flow to the sub channel 91 to clean the dispenser 62 before the next beverage dispensing is performed.

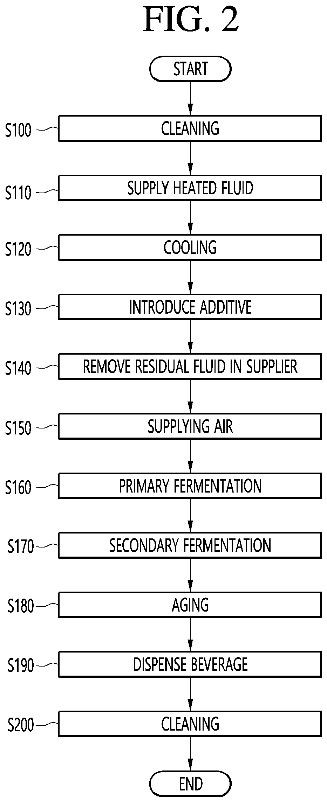

FIG. 2 is a flowchart of a method for controlling a fermentation and aging apparatus according to an embodiment. The fermentation and aging apparatus according to this embodiment may include cleaning operations (S100 and S200) for cleaning the channels. The cleaning operations (S100 and S200) may be separately performed with respect to a beverage making operation. The cleaning operations (S100 and S200) may be performed before and after the beverage making operation.

Also, the cleaning operations (S100 and S200) may be performed by a user input during the beverage making operation. In this case, like a primary fermentation operation (S160) or a secondary fermentation operation (S170), which will be described hereinafter, the cleaning operations (S100 and S200) may be performed while the channel connected to the fermentation module 1 is closed, and the ingredients are not contained in the ingredient suppler 3.

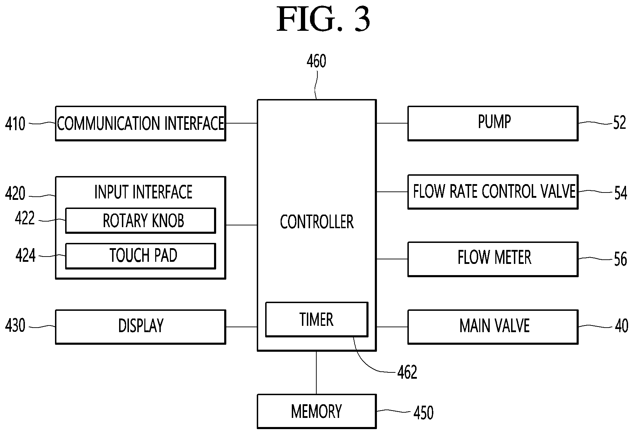

The cleaning operations (S100 and S200) may be performed in a state in which the ingredient containers are accommodated in the ingredient supplier 3, and the fermentation container 12 is accommodated in the fermentation module 1. The user may input a cleaning command through an input interface 420 (referring to FIG. 3), a remote controller, or a portable terminal. A controller 460 may control the fermentation and aging apparatus to perform the cleaning operations (S 100 and S200) according to the input of the cleaning command.

Also, the user may input a beverage making command through the input interface 420, a remote controller, or a portable terminal. The controller 460 may control the fermentation and aging apparatus to perform the cleaning operations (S100 and S200) before and after the beverage making operation according to the input of the beverage making operation.

The controller 460 may supply a fluid, such as water of the tank 51 to the inner channels and the ingredient supplier 3 in the cleaning operation. The supplied fluid may be discharged to the outside through the dispenser 62 together with foreign matter or residue present in the channels and the ingredient supplier 3.

In the fermentation and aging apparatus, the cleaning operation may be performed during a predetermined cleaning time. After the predetermined cleaning time, the cleaning operation may be completed. As the cleaning operation is provided, it is possible to prevent internal contamination or microorganism propagation of the fermentation and aging apparatus.

The beverage making operation of making a beverage may be performed in the fermentation and aging apparatus according to this embodiment. The user may seat the fermentation container 12 on or in the fermentation module 1 for the beverage making operation. In this case, some (for example, malt) of ingredients may be received in the fermentation container 12. The malt may be received in the form of malt oil.

The user may insert the plurality of ingredient containers C1, C2, and C3 into the ingredient supplier 3 before or after the fermentation container 12 is seated. The user may input the beverage making command through the input interface 420, the remote controller, or the mobile terminal. The controller 460 may control the fermentation and aging apparatus to perform the beverage making operation according to the input of the beverage making command.

The beverage making operation may include a fluid supply operation (S110). The fluid supply operation (S110) may be a liquid malt formation operation of mixing the malt in the fermentation container 12 with heated fluid to form liquid malt.

The controller 460 turns on the pump 52 to introduce the fluid from the tank 51 into the fermentation container 12, in the fluid supply operation (S110). According to an embodiment, to introduce heated fluid into the fermentation container 12, the fluid supply module 5 may further include the heater 53. The fluid discharged from the tank 51 may pass through the pump 52, may flow to the heater 53, and may be heated by the heater 53. Fluid heated by the heater 53 may be introduced into the fermentation container 12 through a channel between the fluid supply module 5 and the fermentation module 1. The heated fluid introduced into the fermentation container 12 may be mixed with the malt contained in the fermentation container 12, and the malt in the fermentation container 12 may be mixed with the fluid and gradually diluted. As the heated fluid is supplied to the fermentation container 12, the malt accommodated in the fermentation container 12 may be quickly uniformly mixed with the heated fluid.

The controller 460 may perform the fluid supply operation (S110) until an amount of accumulated fluid detected by the flow meter 56 reaches a target flow rate, and when the amount of accumulated fluid detected by the flow meter 56 reaches the target flow rate, the fluid supply operation (S 110) may be ended. When the fluid supply operation (S 110) is complete, the controller 460 may turn off the pump 52 and the heater 53.

The beverage making operation may include a fermentation tank cooling operation (S120). When the fluid supply operation (S1 10) is complete, the fermentation tank cooling operation (S120) for cooling the fermentation tank 112 or the fermentation container 12 may be performed.

The controller 460 may control the temperature controller 11 to cool the fermentation container 12. The controller 460 may control the refrigerant cycle device 3 to cool the fermentation container 12. When the refrigerant cycle device 3 is driven, the fermentation container 12 may be gradually cooled, and also, the liquid malt accommodated in the fermentation container 12 may be cooled. The controller 460 may control the refrigerant cycle device 13 according to the temperature detected by the temperature sensor 16 installed in the fermentation module 1.

The beverage making operation may include an additive introducing operation (S130). The fermentation and aging apparatus may perform the additive introducing operation (S130) while performing the cooling operation (S120). For example, the fermentation and aging apparatus may perform the additive introducing operation (S130), when the temperature sensed by the temperature sensor 16 reaches a specific temperature value higher than the cooling temperature set for the cooling operation (S120).

In the additive introducing operation (S130), ingredients received in the ingredient supplier 3 may be introduced into the fermentation container 12. The controller 460 may turn on the pump 52. When the pump 52 is turned on, the fluid in the tank 51 may be introduced into the ingredient supplier 3 by passing through the pump 52 and a channel between the fluid supply module 5 and the ingredient supplier 3. Fluid introduced into the ingredient supplier 3 may be mixed with the ingredient contained in the ingredient supplier 3 and introduced into the fermentation container 12 together with the ingredient.

The controller 460 may complete the additive introducing operation (S130) when the accumulated flow rate detected by the flow meter 56 reaches the additive introduction target flow rate from a start of the additive introducing operation (S 130). When the additive introducing operation (S130) is completed, the controller 460 may turn off the pump 52.

The beverage making operation may include an ingredient supplier residual fluid removing operation (S140). When the additive introducing operation (S130) is complete, the ingredient supplier residual fluid removing operation (S140) of removing residual fluid from the ingredient supplier 3 may be performed.

In the ingredient supplier residual fluid removing operation (S140), the controller 460 may turn on the air pump 82. When the air pump 82 is turned on, air may be introduced into the ingredient supplier 3 through a channel between the air pump 82 and the ingredient supplier 3. The air introduced into the ingredient supplier 3 may push residual fluid in the ingredient supplier 3 into a channel between the ingredient supplier 3 and the fermentation module 1. The air flowing into the channel may be introduced into the fermentation container 12 together with the residual fluid. Accordingly, ingredients and fluid, which are not extracted, but remain in the ingredient supplier 3, may be entirely introduced into the fermentation container 12.

The controller 460 may turn on the air pump 82 for a predetermined residual fluid removal time and may end the ingredient supplier residual fluid removing operation (S140) after the predetermined residual fluid removal time has elapsed. When the ingredient supplier residual fluid removing operation (S140) is complete, the controller 460 may turn on the air pump 82.

The beverage making operation may further include an air supplying operation (S150). The fermentation and aging apparatus may complete the cooling operation (S120) when the temperature sensed by the temperature sensor 16 is equal to or less than a cooling temperature at least one time after the cooling operation (S120) is commenced and the refrigerant cycle device is turned on. The fermentation and aging apparatus may perform the air supplying operation (S150) of supplying air into the fermentation container 12 to mix liquid malt, after the cooling operation (S120) is completed.

In the air supplying operation (S150), the controller 460 may turn on the air pump 82. While the air pump 82 is in an ON state, the air may be introduced into the fermentation container 12 by passing through the channel between the air pump 82 and the fermentation module 1. The air introduced into the fermentation container 12 as described above may collide with the liquid malt to help the malt be more uniformly mixed with the heated fluid. In addition, the air colliding with the liquid malt may supply oxygen to the liquid malt. In other words, stirring and aeration may be performed.

The controller 460 may turn on the air pump 82 and may mix the air with the liquid malt for a predetermined mixing time, and may complete the air supplying operation (S150) when the predetermined mixing time has elapsed after the air pump 82 is turned on. In the air supplying operation (S 150), the controller 460 may turn off the air pump 82.

The beverage making operation may include the fermentation operation (S160 and S170). The fermentation operation may include the primary fermentation operation (S160) and the secondary fermentation operation (S170).

The controller 460 may control the temperature controller 11 such that the temperature measured by the temperature sensor 16 is maintained at a primary fermentation target temperature in the primary fermentation operation. The controller 460 may periodically open or close the gas discharge valve 73 that opens or closes a channel between the fermentation container 12 and the outside, and may store the pressure sensed by the gas pressure sensor 72 in a memory 450 while the gas discharge valve 73 is closed. The controller 460 may complete the primary fermentation operation (S160), when a deviation in pressure periodically sensed by the gas pressure sensor exceeds a primary fermentation reference pressure deviation.

The controller 460 may commence the secondary fermentation operation (S170) after the primary fermentation operation (S160) is completed. The controller 460 may control the temperature controller 11 such that the temperature measured by the temperature sensor 16 becomes a secondary fermentation target temperature in the secondary fermentation operation (S170). The secondary fermentation target temperature may be equal to the first fermentation target temperature; however, embodiments are not limited thereto.

The controller 460 may open and close the gas discharge valve 73 based on the inner pressure of the fermentation tank 112 after the secondary fermentation operation (S170) is commenced. When the deviation in the pressure sensed by the gas pressure sensor 72 exceeds a secondary fermentation pressure deviation, or when the secondary fermentation progress time exceeds the predetermined secondary fermentation time, the controller 460 may determine that the secondary fermentation is completed and may end the secondary fermentation operation (S170).

Alternatively, the controller 460 may open and close the gas discharge valve 73 such that the inner pressure of the fermentation tank 112 is maintained to be within a secondary fermentation pressure range for the predetermined secondary fermentation time. The controller 460 may complete the secondary fermentation operation (S170) when the predetermined secondary fermentation time has elapsed. That is, the fermentation and aging apparatus may naturally produce carbonic acid in the beverage through the secondary fermentation operation.

The beverage making operation may include an aging operation (S180). When the primary fermentation operation (S160) and the secondary fermentation operation (S170) are completed, the aging operation (S180) may be performed.

The controller 460 may stand by for an aging time in the aging operation (S180), and may control the temperature controller 11 such that the temperature of the beverage is maintained between an upper limit and a lower limit of a target aging temperature for the aging time.

When the aging time has elapsed, the beverage is completely made. However, if necessary, the aging operation (S180) may be omitted and the beverage making may be completed when the secondary fermentation operation (S170) is completed.

The controller 460 may display that the beverage making is completed, through a display 430 (see FIG. 3). In addition, the controller 460 may inform the user of information on the beverage making operation through a communication interface 410 or the display 430. Therefore, the user may conveniently check the beverage making operation and easily make the beverage through the fermentation and aging apparatus by themselves.

The controller 460 may maintain the temperature of the fermentation container 12 between an upper limit and a lower limit of a target drinking temperature until a beverage dispensing operation (S190) to be described hereinafter is completed.

According to an embodiment, the fermentation and aging apparatus may further perform the beverage dispensing operation (S190) of dispensing a beverage after the beverage is completely made. In the beverage dispensing operation (S190), the user may dispense a beverage by operating the dispenser 62. When the user opens the dispenser 62, the beverage in the fermentation container 12 may be dispensed through the dispenser 62 after passing through the channel between the fermentation module 1 and the dispenser 62.

The user may dispense the beverage at least once through the dispenser 62. In other words, the beverage dispensing operation may be performed at least once, and the controller 460 may determine whether the beverage dispensing is completed by using information, such as a time during which the dispenser 62 is opened.

When the controller 460 determines that all of the beverage in the fermentation container 12 is dispensed, and thus, the beverage dispensing operation is completed, the controller 460 may further perform a cleaning operation (S200) after the beverage making operation and the beverage dispensing operation. The cleaning operation (S200) may be similar to the cleaning operation (S100) before the beverage making operation.

As described above, the fermentation and aging apparatus may supply a fluid, such as water, into ingredient accommodators 31, 32 and 33 or ingredient containers C1, C2 and C3 in order to extract ingredients to the fermentation tank 112 or the fermentation container 12.

Some of the accommodated ingredients may not be extracted and may remain in the ingredient accommodators 31, 32 and 33 or the ingredient containers C1, C2 and C3. In particular, in a case of a fermentation accelerator in the form of a powder, for example, yeast, the fermentation accelerator present at a specific location in the ingredient accommodators 31, 32 and 33 or the ingredient containers C1, C2 and C3 when the fluid is supplied may not be easily extracted through outlets 31b, 32b and 33b and may remain in the ingredient accommodators 31, 32 and 33 or the ingredient containers C1, C2 and C3. In this case, as an extraction rate of the ingredient (fermentation accelerator) is not constant, a quality of the made beverage may de deteriorated or uneven, thereby lowering user's satisfaction.

A configuration and operation of the fermentation and aging apparatus according to an embodiment for solving the above-described problems will be described below with reference to FIGs. 3 to 10.

FIG. 3 is a schematic block diagram illustrating components for controlling a fermentation and aging apparatus according to an embodiment. The components for controlling the fermentation and aging apparatus, which are illustrated in FIG. 3, are not essential components to realize the fermentation and aging apparatus. Accordingly, the fermentation and aging apparatus according to embodiments may include more or less components.

Referring to FIG. 3, the fermentation and aging apparatus may include communication interface 410 to communicate with a terminal, such as a smart phone or a tablet PC, for example, or a server, for example. For example, the controller 460 may receive a request for performing a function of making a beverage from a terminal of the user or recipe information through the communication interface 410. In addition, the controller 460 may transmit various pieces of information, such as an operation of the fermentation and aging apparatus, a beverage making state, and a storage state of the beverage, for example, to the terminal or the server through the communication interface 410.

The communication interface 410 may include a module to support at least one of various wireless/wired communication schemes, which are well known. For example, the communication interface 410 may include a short-range wireless communication module, such as Bluetooth or Near Field Communication (NFC), or a wireless Internet module, such as a wireless local area network (WLAN) module. For example, the NFC module may obtain recipe information corresponding to a beverage preparation pack or a beverage preparation kit from a NFC tag as the NFC tag included in the beverage preparation pack or the beverage preparation kit approaches within a predetermined distance.

The input interface 420 may be configured to receive various requests or commands from a user. For example, the input interface 420 may include a rotary knob 422, a touch pad 424 (or a touch screen), other buttons, and/or a microphone, for example. The controller 460 may receive a request for execution of a beverage making function, recipe information, and control commands for various operations of the fermentation and aging apparatuses through the input interface 420, for example.

According to an embodiment, the fermentation and aging apparatus may further include a code recognizer to obtain recipe information. For example, the code recognizer may be implemented with a quick response (QR) code recognizer to recognize a QR code included in a beverage preparation pack or a beverage preparation kit, and obtain recipe information corresponding to the recognized QR code.

The display 430 may output various pieces of information associated with an operation or state of the fermentation and aging apparatus and various pieces of information associated with the beverage which is being made or stored in the fermentation and aging apparatus. The display 430 may be implemented with a liquid crystal display (LCD), a light emitting diode (LED), and/or an organic light emitting diode (OLED) display, for example.

For example, the display 430 may output the information in a graphic form or a text form. The fermentation and aging apparatus may further include a speaker to output the information in the form of a voice. The controller 460 may output the information through various combinations of a graphic, a text, and/or voice using the display 430 and the speaker.

The memory 450 may store various pieces of information or data associated with the operation of the fermentation and aging apparatus. For example, the memory 450 may store recipe information for beverages that may be made or various program data for the operation of the fermentation and aging apparatus. In addition, the memory 450 may store various graphic data associated with screens displayed through the display 430.

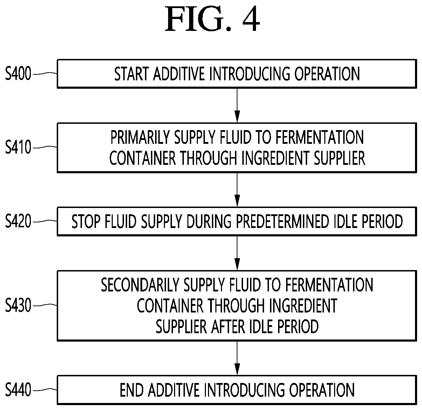

In addition, the memory 450 may store values for making beverages corresponding to multiple pieces of recipe information. For example, the values for making the beverages may include a cooling temperature described with reference to FIG. 2, a primary fermentation target temperature, a primary fermentation reference pressure deviation, a secondary fermentation target temperature, a secondary fermentation pressure range, or a secondary fermentation time. In addition, the values for making the beverages may further include a first open time, a close time, a second open time, for example, which will be described hereinafter. In some embodiments, the values for making the beverages may further include information on an idle period which will be described below with reference to FIGs. 4 to 13.

The controller 460 may control an overall operation of the fermentation and aging apparatus. In this case, the controller 460 may refer to at least one controller. The at least one controller may be implemented in hardware, such as a CPU, an application processor, a microcomputer, an integrated circuit, and/or an application specific integrated circuit (ASIC), for example.

The controller 460 may control the temperature controller 11 based on the temperature sensed by the temperature sensor 16 to adjust the temperature of the fermentation tank 112 to the target temperature in the cooling operation (S120) or the fermentation operations (S160 and S170). As described above, the temperature controller 11 may include the refrigerant cycle device 13 to cool the fermentation tank 112 and the heater 14 to heat the fermentation tank 112.

The controller 460 may control the gas pressure sensor 72 to measure the inner pressure of the fermentation tank 112 in the fermentation operation (S160 and S170). In addition, the controller 460 may control the gas discharge valve 73 to adjust the inner pressure of the fermentation tank 112 or discharge gas including off-flavor generated during fermentation to the outside, in the fermentation operations (S160 and S170).

The controller 460 according to an embodiment may set an idle period in which fluid, such as water is not additionally introduced into the ingredient accommodators 31, 32 and 33 or the ingredient containers C1, C2 and C3 for a predetermined period of time, during the additive introducing operation (S130) described above with reference to FIG. 2. For example, the controller 460 may start the idle period when the amount of supplied fluid calculated based on the flow rate detected by the flow meter 56 reaches a predetermined primary fluid supply amount or a fluid supply time measured by a timer reaches a predetermined primary fluid supply time.

During the idle period, the controller 460 performs control to turn off the pump 52 or close the flow rate control valve 54 such that fluid is not supplied to the ingredient supplier 3. In addition, during the idle period, the controller 460 closes the main valve 40 such that fluid introduced into the ingredient accommodators 31, 32 and 33 or the ingredient containers C1, C2 and C3 remains. In this case, as fluid remains in the ingredient container C1 in which the fermentation accelerator is accommodated during the idle period, the fermentation accelerator remaining therein may be soaked or the powder may be separated or may be separated from the inner wall of the ingredient container C1.

After the idle period, the controller 460 turns on the pump 52 and open the flow rate control valve 54 to additionally introduce fluid into the ingredient supplier 3. In addition, the controller 460 opens the main valve 40. As a result, the fermentation accelerator remaining in the ingredient container C1 may be extracted together with the additionally introduced fluid and introduced into the fermentation container 12.

A control operation related to the additive introducing operation (S130) will be described below with reference to FIGs. 4 to 10.

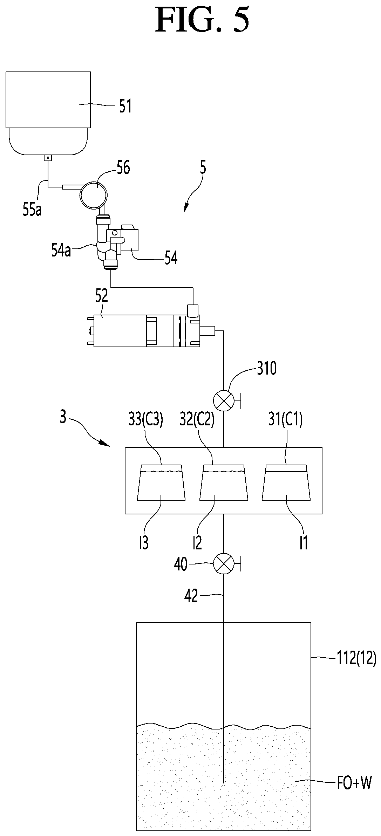

FIG. 4 is a flowchart of a control operation of a fermentation and aging apparatus according to an embodiment. In particular, Fig. 4 illustrates the step of introducing additive (S130) in further detai. FIGs. 5 to 9 are views showing examples related to the control operation of the fermentation and aging apparatus shown in FIG. 4.

Referring to FIG. 4, the fermentation and aging apparatus may start (S400) the additive introducing operation while the beverage is made. As described above with reference to FIG. 2, the fermentation and aging apparatus may start the additive introducing operation (S130) after the cooling operation (S120).

Referring to FIG. 5, after the cooling operation (S120), a mixture FO+W of an object to be fermented FO and a fluid, such as water W, may be accommodated in the fermentation container 12 (or the fermentation tank 112).

In addition, additives I1, I2 and I3 may be accommodated in the ingredient containers C1, C2 and C3 (or the ingredient accommodators 31, 32 and 33) of the ingredient supplier 3. For example, a first additive I1 may be a fermentation accelerator in the form of a powder, and a second additive I2 and a third additive I3 may be ingredients in the form of liquid, for example, hop oil, and/or flavor additives.

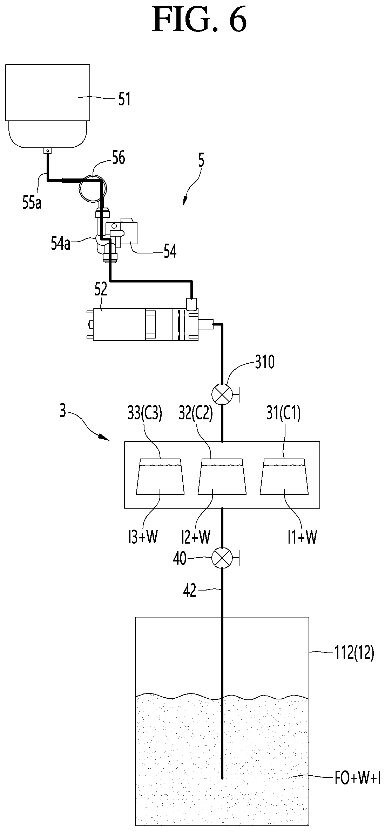

As the additive introducing operation starts, the fermentation and aging apparatus performs a primary fluid supply operation of supplying a fluid, such as water to the fermentation container 12 (or the fermentation tank 112) through the ingredient supplier 3 (S410). Referring to FIG. 6, the controller 460 turns on the pump 52 and open the flow rate control valve 54, thereby moving the fluid accommodated in the tank 51 to supply channel 55B through tank discharge channel 55A.

In addition, the controller 460 may close the bypass valve 35 and open ingredient supply valve 310. As a result, the fluid accommodated in the tank 51 may be moved to the ingredient supplier 3 through the supply channel 55B and the main channel 41.

The fluid moved to the ingredient supplier 3 may be mixed (I1+W, I2+W and I3+W) with the additives respectively accommodated in the ingredient containers C1, C2 and C3 while sequentially passing through the ingredient containers C1, C2 and C3. As the mixtures I1+W, I2+W and I3+W of fluid and the additives are extracted to the main channel 42, by continuously supplying fluid to the ingredient supplier 3. The fluid and the ingredients extracted to the main channel 42 may be introduced into the fermentation container 12. As a result, the mixture FO+W+I of the object to be fermented, fluid, and additives may be accommodated in the fermentation container 12.

In this case, the additives I2 and I3 in the form of liquid may be easily extracted from the ingredient containers C2 and C3 to be introduced into the fermentation container 12, but the fermentation accelerator I1 in the form of powder may not be fully extracted and some may remain in the ingredient container C1.

The fermentation and aging apparatus stops fluid supply during the predetermined idle period after the primary fluid supply operation (S420). When the amount of fluid (the amount of supplied fluid) supplied from the tank 51 reaches a predetermined primary fluid supply amount, the primary fluid supply operation may end. For example, the controller 460 may accumulate and calculate the amount of supplied fluid during the primary fluid supply operation based on the flow rate detected by the flow meter 56 and end the primary fluid supply operation when the calculated amount of supplied fluid reaches the predetermined primary fluid supply amount.

In some embodiments, the primary fluid supply operation may be performed during a predetermined primary fluid supply time. In this case, the controller 460 may measure the progress time of the primary fluid supply operation using the timer 462, and end the primary fluid supply operation when the measured progress time reaches the primary fluid supply time.

The controller 460 may turn off the pump 52 in order to end the primary fluid supply operation. In some embodiments, the controller 460 may close the flow rate control valve 54.

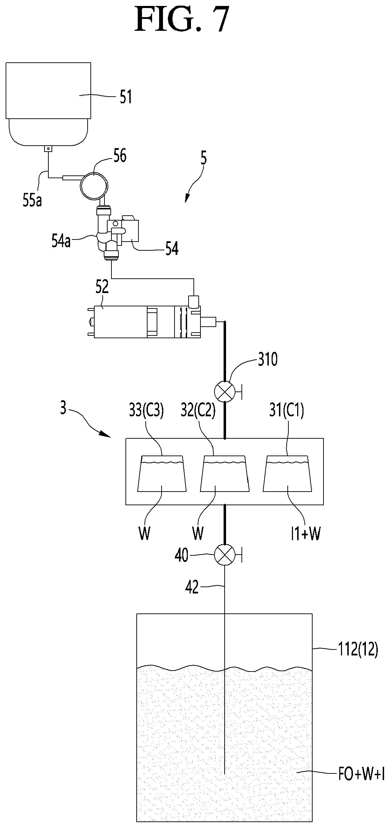

In addition, the controller 460 closes the main valve 40. As the main valve 40 is closed, as shown in FIG. 7, a state in which fluid remains in the main channel 42 between the main valve 40 and the ingredient supplier 3 and the ingredient containers C1, C2 and C3 is maintained. In some embodiments, fluid may remain in some of the channels between the tank 51 and the ingredient supplier 3.

For example, assuming that the second additive I2 and the third additive I3 are all extracted from the ingredient containers C2 and C3, the fluid, such as water W may remain in the ingredient containers C2 and C3. In contrast, as some of the first additive I1 in the form of powder remains in the ingredient container C1, the first additive and fluid may remain together in the ingredient container C1 (I1+W). In this case, after the idle period, the first additive I1 may be soaked by fluid or powder may be separated from each other or separated from the inner wall or bottom of the ingredient container C1, thereby being easily extracted from the ingredient container C1.

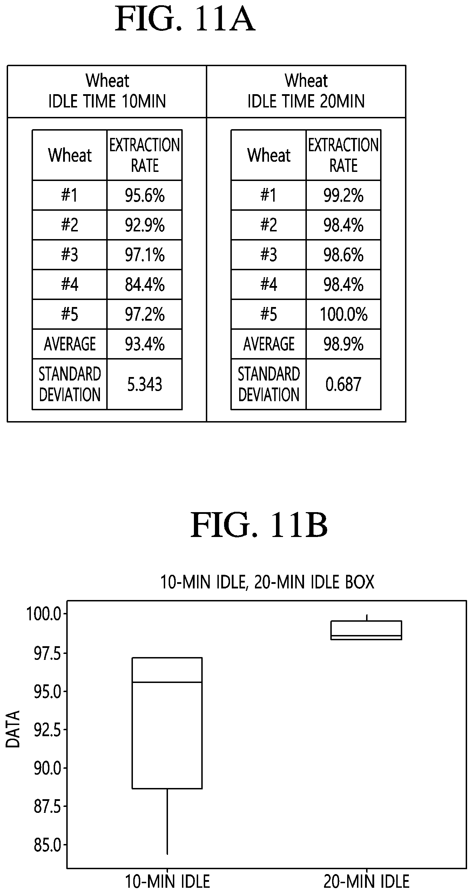

The idle period may be about 10 minutes to 20 minutes, without being limited thereto. In addition, the idle period may be set differently according to a type of beverage to be made or a type of fermentation accelerator in the form of powder, without being limited thereto. The idle period will be described below with reference to FIGs. 11A to 13B.

After the idle period, the fermentation and aging apparatus performs a secondary fluid supply operation of supplying a fluid, such as water to the fermentation container 12 (or the fermentation tank 112) through the ingredient supplier 3 (S430). After the secondary fluid supply operation, the additive introducing operation may end (S440).

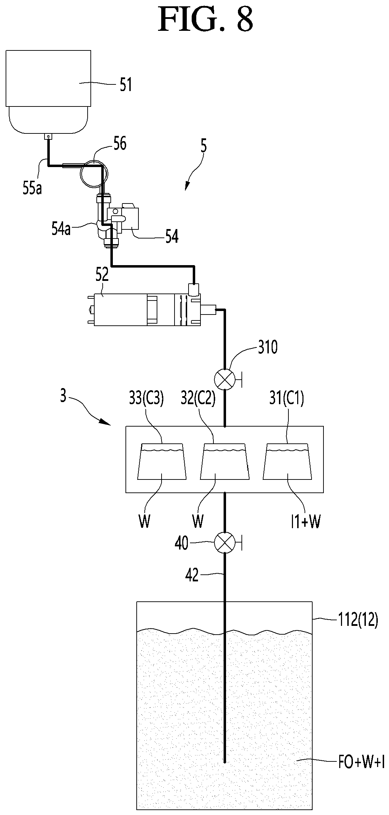

Referring to FIG. 8, the controller 460 turns on the pump 52 and open the flow rate control valve 54 after the idle period, such that the fluid accommodated in the tank 51 may be discharged through the tank discharge channel 55a. The discharged fluid may be supplied to the ingredient supplier 3 through the supply channel 55b and the main channel 41.

In addition, the controller 460 opens the main valve 40. Therefore, the fluid remaining in the ingredient containers C1, C2 and C3 may be introduced into the fermentation container 12 through the main channel 42 along with fluid newly supplied to the ingredient supplier 3. The mixture I1+W of the first additive I1 and water W accommodated in the first ingredient container C1 may also be extracted from the ingredient supplier 3 and introduced into the fermentation container 12. As the first additive I1 is soaked or is separated from the inner wall of the first ingredient container C1 during the idle period, the first additive may be more effectively extracted from the first ingredient container C1.

When the amount of fluid supplied from the tank 51 (the amount of supplied fluid) reaches a predetermined secondary fluid supply amount, the secondary fluid supply operation may end. For example, the controller 460 may accumulate and calculate the amount of supplied fluid during the secondary fluid supply operation based on the flow rate detected by the flow meter 56 and end the secondary fluid supply operation when the calculated amount of supplied fluid reaches a predetermined secondary water supply amount.

The secondary fluid supply operation may be performed during a predetermined secondary fluid supply time. In this case, the controller 460 may measure a progress time of the secondary fluid supply operation using the timer 462 and end the secondary fluid supply operation when the measured progress time reaches the secondary fluid supply time.

In order to more stably extract the additives I1, I2 and I3, the secondary fluid supply amount may be equal to or greater than the primary fluid supply amount. In addition or alternatively, the secondary fluid supply time may be equal to or greater than the primary fluid supply time.

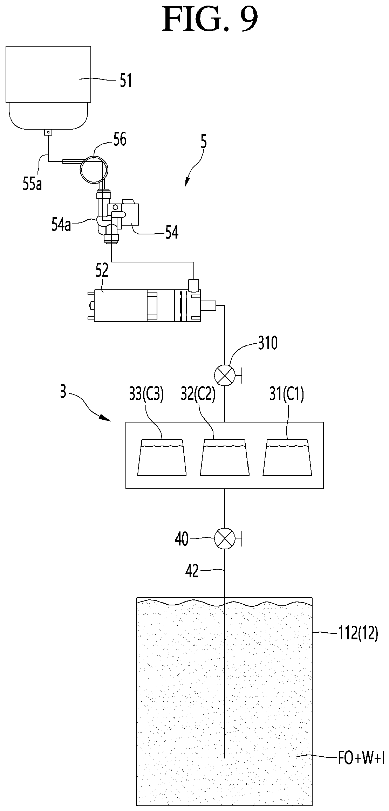

The controller 460 may turn off the pump 52 in order to end the secondary fluid supply operation. In this case, as shown in FIG. 9, all of the additives I1, I2 and I3 accommodated in the ingredient containers C1, C2 and C3 may be extracted to the fermentation container 12.

That is, as all of the additives I1, I2 and I3 may be extracted to the fermentation container 12 while the beverage is made, correct amounts of additives may be introduced in order to make the beverage. Therefore, it is possible to prevent the quality of the made beverage from deteriorating and minimize a phenomenon wherein beverages having different qualities are made whenever the beverage is made.

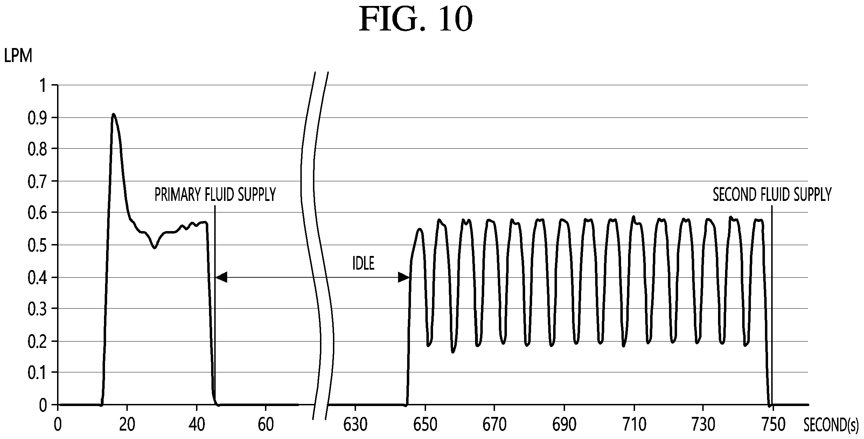

FIG. 10 is a graph showing change in flow rate during an additive introducing operation according to the embodiments of FIGs. 4 to 9. Referring to FIG. 10, as fluid is not present in the channels 55A, 55B, 41 and 42 and the ingredient supplier 3 at the beginning of the primary fluid supply operation, the flow rate may rapidly increase. Thereafter, as fluid is present in the channels and the ingredient supplier 3, the flow rate may be decreased and then maintained in a predetermined range.

The primary fluid supply operation may be performed to correspond to the predetermined primary fluid supply amount or the primary fluid supply time. After the primary fluid supply operation is performed, the idle period in which fluid supply is stopped may proceed. During the idle period, as the pump 52 is not driven, the flow rate may be 0.

After the idle period, the secondary fluid supply operation is performed. As shown in FIG. 10, the secondary fluid supply operation may be longer than the primary fluid supply operation, and the amount of fluid supplied in the secondary fluid supply operation may be greater than the amount of fluid supplied in the primary fluid supply operation.

In the secondary fluid supply operation, the controller 460 may repeatedly control the degree of opening of the flow rate control valve 54, for example, a step motor, to a first level and a second level and/or repeatedly open/close the ingredient supply valve 310, such that pulsation occurs in the fluid flowing in the channels 55A, 55B, 41 and 42 and the ingredient supplier 3. Thus, a pulsatile flow may be generated. Alternatively or additionally, the controller 460 may repeatedly control to drive and stop the pump 52. In this case, as shown in FIG. 10, the flow rate detected in the secondary fluid supply operation may be changed in a form similar to a kind of waveform.

As the idle period increases, the additive I1 in the form of power remaining in the ingredient container C1 may be more effectively extracted. However, when the idle period excessively increases, the overall beverage making time increases and the beverage may deteriorate.

FIGs. 11A to 13B are views showing experimental data showing an extraction rate according to a type of fermentation accelerator and an idle period in relation to the control operation of FIG. 4. FIGs. 11A and 11B show experimental data when pulsation does not occur in the secondary fluid supply operation.

Referring to FIGs. 11A and 11B, when a beverage "Wheat" is made, if the idle period is 10 min, the extraction rate of the fermentation accelerator I1 may vary from 84.4% to 97.2%, and thus, may have a large deviation. The quality of the beverage when 84.4% of the fermentation accelerator I1 is extracted may be lower than the quality of the beverage when 97.2% of the fermentation accelerator is extracted. That is, as the deviation in extraction rate of the fermentation accelerator I1 increases, the deviation in quality of the made beverage may increase.

When the idle period is 20 min, the extraction rate of the fermentation accelerator I1 may vary from 98.4% to 100% and the average extraction rate may increase as compared to the case where the idle period is 10 min and the deviation may rapidly decrease. When the average extraction rate is equal to or greater than a predetermined extraction rate, for example, 95%, as the deviation is small, as small as approximately 2%, the quality of the made beverage may be maintained at a constant level. Based on this, the fermentation and aging apparatus may set the idle period to about 20 min when pulsation does not occur in the secondary water supply operation.

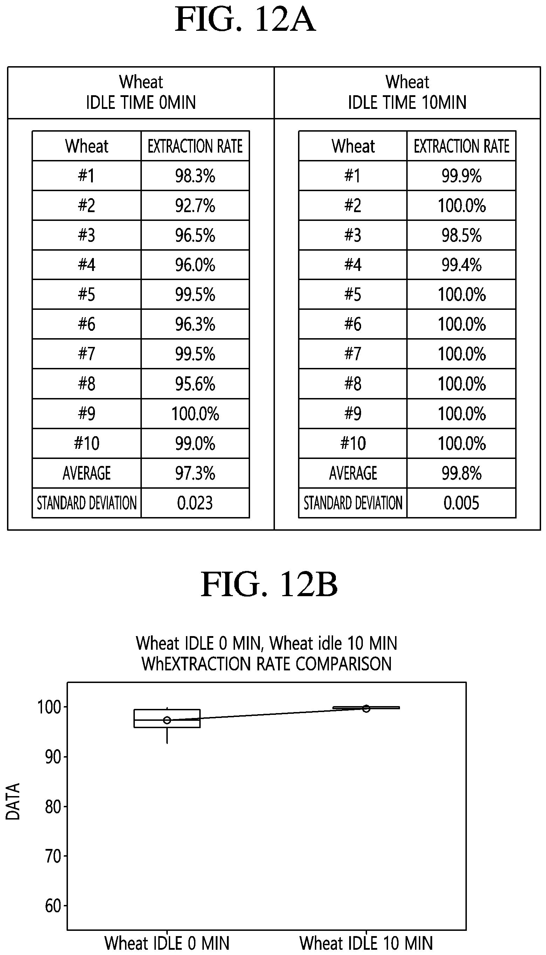

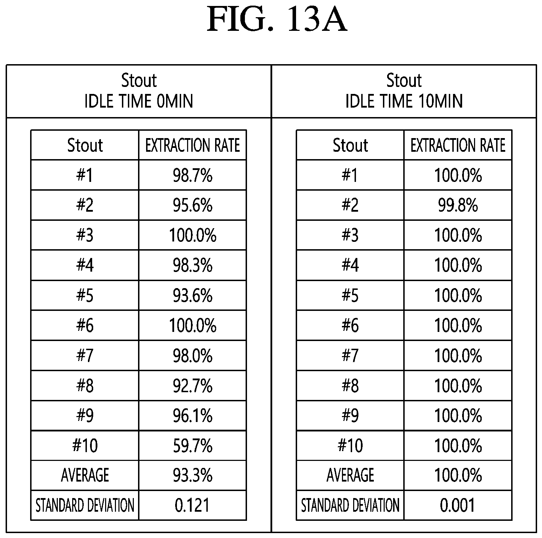

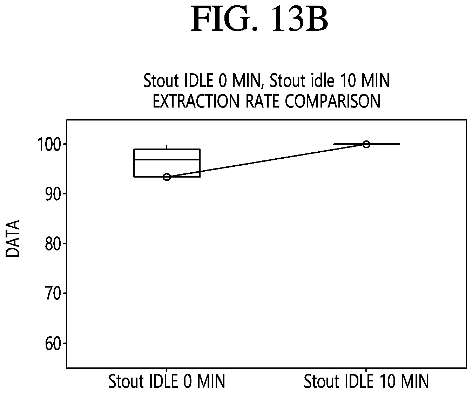

FIGs. 12A and 13A-13B show experimental data when pulsation occurs in the secondary fluid supply operation. Referring to FIG. 12A-12B, when a beverage "Wheat" is made, if the idle period is not present, the extraction rate of the fermentation accelerator I1 may vary from 92.7% to 100% and thus, may have a deviation. When the idle period is 10 min, the extraction rate of the fermentation accelerator I1 may vary from 98.5% to 100% and the average extraction rate may increase and the deviation may decrease in comparison to the case where the idle period is not present.

In addition, referring to FIGs. 13A-13B, when a beverage "Stout" is made, if the idle period is not present, the extraction rate of the fermentation accelerator I1 may vary from 59.7% to 100%, and thus, may have a larger deviation than the beverage "Wheat". When the idle period is 10 min, the extraction rate of the fermentation accelerator I1 may vary from 99.8% to 100% and the average extraction rate may increase and the deviation may decrease in comparison to the case where the idle period is not present. Based on this, the fermentation and aging apparatus may set the idle period to about 10 min when pulsation does not occur in the secondary fluid supply operation. That is, regardless of whether pulsation occurs in the secondary fluid supply operation, the fermentation and aging apparatus may set the idle period of about 10 min to 20 min between the primary fluid supply operation and the secondary fluid supply operation of the additive introducing operation, thereby maximizing the extraction rate of the ingredient (fermentation accelerator) in the form of powder.

The fermentation and aging apparatus may differently set the idle period according to the type of the fermentation accelerator. That is, a manufacturer of the fermentation and aging apparatus may set an idle period having an average extraction rate equal to or greater than a reference extraction rate with respect to each fermentation accelerator based on characteristics of each fermentation accelerator or experimental data.

According to various embodiments, the fermentation and aging apparatus may set a predetermined idle period between the primary fluid supply operation and the secondary fluid supply operation when the additive accommodated in the ingredient accommodator or the ingredient container is introduced, thereby deriving soaking or separation of the ingredient (fermentation accelerator) in the form of power. Therefore, it is possible to maximize the extraction rate.

In addition, deviation in extraction rates of additives accommodated in the ingredient accommodator or the ingredient container may decrease. Therefore, when the beverage is made, correct amounts of additives may be introduced into the fermentation container for making the beverage, thereby preventing a quality of made beverage from deteriorating, minimizing quality deviation between the made beverages, and maximizing user satisfaction.

Embodiments disclosed herein provide a fermentation and aging apparatus capable of maximizing the extraction rate of a fermentation accelerator in the form of powder accommodated in an ingredient accommodator. Embodiments disclosed herein also provide a fermentation and aging apparatus capable of minimizing a quality deviation of a beverage to be made, by uniformizing the extraction rate of the fermentation accelerator.

A fermentation and aging apparatus according to an embodiment may perform an operation of introducing at least some ingredients accommodated in an ingredient accommodator into a fermentation container while a beverage is made. In the operation, a controller sequentially performs a primary fluid supply operation of turning on a pump such that fluid accommodated in a tank is introduced into the ingredient accommodator, an operation of turning off the pump during a predetermined idle period, and a secondary fluid supply operation of turning on the pump such that the fluid accommodated in the tank is introduced into the ingredient accommodator. The fluid introduced into the ingredient accommodator is introduced into the fermentation container along with ingredients accommodated in the ingredient accommodator. As the pump is turned off during the idle period, fluid remains in the ingredient accommodator during the idle period, and the ingredients remaining in the ingredient accommodator are soaked, separated from each other or separated from an inner wall of the ingredient accommodator by the remaining fluid, thereby being more effectively extracted in the secondary fluid supply operation.

The controller may detect completion of the primary fluid supply operation and the secondary fluid supply operation based on the amount of supplied fluid based on a flow rate detected by a flow meter or a fluid supply time measured using a timer. In some embodiments, the amount of supplied fluid set with respect to the secondary fluid supply operation may be equal to or greater than the amount of supplied fluid set with respect to the primary fluid supply operation. Alternatively, a fluid supply time set with respect to the second fluid supply operation may be equal to or greater than a fluid supply time set with respect to the primary fluid supply operation. Therefore, it is possible to improve a final extraction rate of \ingredients remaining in the ingredient accommodator.

The controller may repeatedly control a degree of opening of a flow rate control valve in the secondary fluid supply operation to a first level and a second level, such that pulsation occurs in a channel. The controller may close a main valve disposed in a channel between the ingredient accommodator and the fermentation container during an idle period, such that fluid remains in the ingredient accommodator.

The scope should be construed according to the following claims.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A fermentation and aging apparatus, comprising:
a tank (51) for accommodating fluid;
a fermentation container (12) forming a space for making a beverage;
an ingredient accommodator (31, 32, 33) for accommodating ingredients for making the beverage, the ingredient accommodator (31, 32, 33) being connected to the tank (51) and to the fermentation container (12);
a pump (52) disposed in a first channel (41) connecting the tank (51) to the ingredient accommodator (31, 32, 33);
a main valve (40) disposed in a second channel (42) connecting the ingredient accommodator (31, 32, 33) to the fermentation container (12); and
a controller (460) configured to control the pump (52),
wherein the controller (460) is configured to:
turn on the pump (52) in a primary fluid supply operation for introducing fluid of the tank (51) into the ingredient accommodator (31, 32, 33) and for introducing the fluid together with ingredients into the fermentation container (12);
turn off the pump (52) for a predetermined idle period;
turn on the pump (52) in a secondary fluid supply operation for introducing fluid of the tank (51) into the ingredient accommodator (31, 32, 33) and for introducing the fluid together with ingredients remaining in the ingredient accommodator (31, 32, 33) into the fermentation container (12); and
open the main valve (40) during the primary fluid supply operation and the secondary fluid supply operation;
**characterized in that** the controller (460) is configured to:
close the main valve (40) during the idle period, such that fluid introduced into the ingredient accommodators (31, 32, 33) remains therein during the idle period.

2. The fermentation and aging apparatus of claim 1, further comprising a flow meter (56) disposed in the first channel (41),
wherein the controller (460) is configured to calculate an amount of fluid supplied in the primary fluid supply operation based on a flow rate detected by the flow meter (56) during the primary fluid supply operation, and to turn off the pump (52) when the calculated amount of the supplied fluid equals or exceeds a predetermined primary fluid supply amount, and/or
wherein the controller (460) is configured to calculate the amount of fluid supplied in the secondary fluid supply operation based on a flow rate detected by the flow meter (56) during the secondary fluid supply operation, and to turn off the pump (52) when the calculated amount of supplied fluid equals or exceeds a predetermined secondary fluid supply amount.

3. The fermentation and aging apparatus of claim 1 or 2, wherein the secondary fluid supply amount is equal to or greater than the primary fluid supply amount.

4. The fermentation and aging apparatus according to any one of the preceding claims, wherein the controller (460) is configured to measure a primary fluid supply time during the primary fluid supply operation using a timer and to turn off the pump (52) when the measured primary fluid supply time reaches a predetermined primary fluid supply time, and/or
wherein the controller (460) is configured to measure a secondary fluid supply time using the timer during the secondary fluid supply operation and to turn off the pump (52) when the measured secondary fluid supply time reaches a predetermined secondary fluid supply time.

5. The fermentation and aging apparatus of claim 4, wherein the predetermined secondary fluid supply time is equal to or greater than the predetermined primary fluid supply time.

6. The fermentation and aging apparatus according to any one of the preceding claims, wherein the idle period is 10 minutes or more, or wherein the idle period is between 10 and 20 minutes.

7. The fermentation and aging apparatus according to any one of the preceding claims, wherein the idle period is based on a type of beverage being made.

8. The fermentation and aging apparatus according to any one of the preceding claims, further comprising a flow rate control valve (54) disposed in the first channel (41),
wherein in the primary fluid supply operation and/or in the secondary fluid supply operation, the controller (460) is configured to repeatedly switch a degree of opening of the flow rate control valve (54) between a first level and a second level in order to generate a pulsating fluid flow through the ingredient accommodator (31, 32, 33).

9. The fermentation and aging apparatus according to any one of the preceding claims, wherein the ingredient accommodator (31, 32, 33) is provided in plurality, and
wherein the ingredient accommodators (31, 32, 33) are connected to each other in series such that fluid sequentially flows through the ingredient accommodators (31, 32, 33).

10. A method for controlling a fermentation and aging apparatus according to any one of the preceding claims, the method comprising:
a primary fluid supply operation of introducing fluid of a tank (51) into an ingredient accommodator (31, 32, 33) and introducing the fluid together with ingredients into a fermentation container (12);
stopping introducing of fluid into the ingredient accommodator (31, 32, 33) for a predetermined idle period; and
a secondary fluid supply operation for again introducing fluid of the tank (51) into the ingredient accommodator (31, 32, 33) and for introducing the fluid together with ingredients remaining in the ingredient accommodator (31, 32, 33) into the fermentation container (12);
wherein the main valve (40) is opened during the primary fluid supply operation and the secondary fluid supply operation;
**characterized in that** the main valve (40) is closed during the idle period, such that fluid introduced into the ingredient accommodators (31, 32, 33) remains therein during the idle period.

11. The method of claim 10, further comprising:
calculating an amount of fluid supplied in the primary fluid supply operation based on a flow rate detected during the primary fluid supply operation, and stopping introducing of fluid into the ingredient accommodator (31, 32, 33) when the calculated amount of the supplied fluid equals or exceeds a predetermined primary fluid supply amount, and/or
calculating the amount of fluid supplied in the secondary fluid supply operation based on a flow rate detected during the secondary fluid supply operation, and stopping introducing of fluid into the ingredient accommodator (31, 32, 33) when the calculated amount of supplied fluid equals or exceeds a predetermined secondary fluid supply amount.

12. The method of claim 10 or 11, wherein introducing of fluid into the ingredient accommodator (31, 32, 33) is stopped, when a measured primary fluid supply time reaches a predetermined primary fluid supply time and/or when a measured secondary fluid supply time reaches a predetermined secondary fluid supply time.

13. The method of claim 12, wherein the predetermined secondary fluid supply time is equal to or greater than the predetermined primary fluid supply time.

14. The method according to any one of the preceding claims 10 to 13, further comprising:
generating a pulsating fluid flow through the ingredient accommodator (31, 32, 33) in the primary fluid supply operation and/or in the secondary fluid supply operation.

## Patentansprüche

1. Fermentierungs- und Alterungsvorrichtung, die Folgendes umfasst:
einen Behälter (51) zum Aufnehmen von Fluid;
einen Fermentierungsbehälter (12), der einen Raum zum Herstellen eines Getränks bildet;
eine Zutatenaufnahmeeinrichtung (31, 32, 33) zum Aufnehmen von Zutaten zum Herstellen des Getränks, wobei die Zutatenaufnahmeeinrichtung (31, 32, 33) mit dem Behälter (51) und dem Fermentierungsbehälter (12) verbunden ist;
eine Pumpe (52), die in einem ersten Kanal (41) angeordnet ist, der den Behälter (51) mit der Zutatenaufnahmeeinrichtung (31, 32, 33) verbindet;
ein Hauptventil (40), das in einem zweiten Kanal (42) angeordnet ist, der die Zutatenaufnahmeeinrichtung (31, 32, 33) mit dem Fermentierungsbehälter (12) verbindet; und
eine Steuereinheit (460), die konfiguriert ist, die Pumpe (52) zu steuern,
wobei die Steuereinheit (460) konfiguriert ist zum:
Einschalten der Pumpe (52) in einer Hauptfluidzufuhroperation zum Einleiten des Fluids aus dem Behälter (51) in die Zutatenaufnahmeeinrichtung (31, 32, 33) und zum Einleiten des Fluids zusammen mit Zutaten in den Fermentierungsbehälter (12);
Ausschalten der Pumpe (52) für einen vorgegebenen Ruhezeitraum;
Einschalten der Pumpe (52) in einer Nebenfluidzufuhroperation zum Einleiten des Fluids aus dem Behälter (51) in die Zutatenaufnahmeeinrichtung (31, 32, 33) und zum Einleiten des Fluids zusammen mit Zutaten, die in der Zutatenaufnahmeeinrichtung (31, 32, 33) verbleiben, in den Fermentierungsbehälter (12) und
Öffnen des Hauptventils (40) während der Hauptfluidzufuhroperation und der Nebenfluidzufuhroperation;
**dadurch gekennzeichnet, dass** die Steuereinheit (460) konfiguriert ist zum:
Schließen des Hauptventils (40) während des Ruhezeitraums derart, dass ein Fluid, das in die Zutatenaufnahmeeinrichtungen (31, 32, 33) eingeleitet wurde, während des Ruhezeitraums darin verbleibt.

2. Fermentierungs- und Alterungsvorrichtung nach Anspruch 1, die ferner einen Durchflussmesser (56) umfasst, der im ersten Kanal (41) angeordnet ist,
wobei die Steuereinheit (460) konfiguriert ist, eine Menge des Fluids, die in der Hauptfluidzufuhroperation zugeführt wurde, auf der Grundlage einer Durchflussmenge zu berechnen, die durch den Durchflussmesser (56) während der Hauptfluidzufuhroperation detektiert wurde, und die Pumpe (52) auszuschalten, wenn die berechnete Menge des zugeführten Fluids gleich einer vorgegebenen Hauptfluidzufuhrmenge ist oder sie überschreitet, und/oder
die Steuereinheit (460) konfiguriert ist, die Menge des Fluids, die in der Nebenfluidzufuhroperation zugeführt wurde, auf der Grundlage einer Durchflussmenge, die durch den Durchflussmesser (56) während der Nebenfluidzufuhroperation detektiert wurde, zu berechnen und die Pumpe (52) auszuschalten, wenn die berechnete Menge des zugeführten Fluids gleich einer vorgegebenen Nebenfluidzufuhrmenge ist oder sie überschreitet.

3. Fermentierungs- und Alterungsvorrichtung nach Anspruch 1 oder 2, wobei die Nebenfluidzufuhrmenge gleich oder größer als die Hauptfluidzufuhrmenge ist.

4. Fermentierungs- und Alterungsvorrichtung nach einem der vorhergehenden Ansprüche, wobei die Steuereinheit (460) konfiguriert ist, eine Hauptfluidzufuhrzeit während der Hauptfluidzufuhroperation unter Verwendung eines Zeitgebers zu messen und die Pumpe (52) auszuschalten, wenn die gemessene Hauptfluidzufuhrzeit eine vorgegebene Hauptfluidzufuhrzeit erreicht, und/oder
die Steuereinheit (460) konfiguriert ist, eine Nebenfluidzufuhrzeit unter Verwendung des Zeitgebers während der Nebenfluidzufuhroperation zu messen und die Pumpe (52) auszuschalten, wenn die gemessene Nebenfluidzufuhrzeit eine vorgegebene Nebenfluidzufuhrzeit erreicht.

5. Fermentierungs- und Alterungsvorrichtung nach Anspruch 4, wobei die vorgegebene Nebenfluidzufuhrzeit gleich oder größer als die vorgegebene Hauptfluidzufuhrzeit ist.

6. Fermentierungs- und Alterungsvorrichtung nach einem der vorhergehenden Ansprüche, wobei der Ruhezeitraum 10 Minuten oder mehr ist oder der Ruhezeitraum im Bereich von 10 bis 20 Minuten ist.

7. Fermentierungs- und Alterungsvorrichtung nach einem der vorhergehenden Ansprüche, wobei der Ruhezeitraum einen Typ eines Getränks, das hergestellt wird, als Grundlage verwendet.

8. Fermentierungs- und Alterungsvorrichtung nach einem der vorhergehenden Ansprüche, die ferner ein Durchflussmengensteuerventil (54) umfasst, das im ersten Kanal (41) angeordnet ist,
wobei in der Hauptfluidzufuhroperation und/oder in der Nebenfluidzufuhroperation die Steuereinheit (460) konfiguriert ist, den Grad einer Öffnung des Durchflussmengensteuerventils (54) zwischen einem ersten Pegel und einem zweiten Pegel wiederholt umzuschalten, um einen pulsierenden Fluidstrom durch die Zutatenaufnahmeeinrichtung (31, 32, 33) zu erzeugen.

9. Fermentierungs- und Alterungsvorrichtung nach einem der vorhergehenden Ansprüche, wobei die Zutatenaufnahmeeinrichtung (31, 32, 33) mehrfach vorgesehen ist und
die Zutatenaufnahmeeinrichtungen (31, 32, 33) derart zueinander in Reihe geschaltet sind, dass Fluid sequenziell durch die Zutatenaufnahmeeinrichtungen (31, 32, 33) strömt.

10. Verfahren zum Steuern einer Fermentierungs- und Alterungsvorrichtung nach einem der vorhergehenden Ansprüche, wobei das Verfahren Folgendes umfasst:
eine Hauptfluidzufuhroperation des Einleitens eines Fluids aus einem Behälter (51) in eine Zutatenaufnahmeeinrichtung (31, 32, 33) und des Einleitens des Fluids zusammen mit Zutaten in einen Fermentierungsbehälter (12);
ein Stoppen des Einleitens des Fluids in die Zutatenaufnahmeeinrichtung (31, 32, 33) für einen vorgegebenen Ruhezeitraum und
eine Nebenfluidzufuhroperation zum erneuten Einleiten des Fluids aus dem Behälter (51) in die Zutatenaufnahmeeinrichtung (31, 32, 33) und zum Einleiten des Fluids zusammen mit Zutaten, die in der Zutatenaufnahmeeinrichtung (31, 32, 33) verbleiben, in den Fermentierungsbehälter (12);
wobei das Hauptventil (40) während der Hauptfluidzufuhroperation und der Nebenfluidzufuhroperation geöffnet ist;
**dadurch gekennzeichnet, dass** das Hauptventil (40) während des Ruhezeitraums geschlossen ist, derart, dass ein Fluid, das in die Zutatenaufnahmeeinrichtungen (31, 32, 33) eingeleitet wurde, während des Ruhezeitraums darin verbleibt.

11. Verfahren nach Anspruch 10, das ferner Folgendes umfasst:
Berechnen einer Menge des Fluids, die in der Hauptfluidzufuhroperation zugeführt wurde, auf der Grundlage der Durchflussmenge, die während der Hauptfluidzufuhroperation detektiert wurde, und Stoppen des Einleitens des Fluids in die Zutatenaufnahmeeinrichtung (31, 32, 33), wenn die berechnete Menge des zugeführten Fluids gleich einer vorgegebenen Hauptfluidzufuhrmenge ist oder sie überschreitet, und/oder
Berechnen der Menge des Fluids, die in der Nebenfluidzufuhroperation zugeführt wurde, auf der Grundlage der Durchflussmenge, die während der Nebenfluidzufuhroperation detektiert wurde, und Stoppen des Einleitens des Fluids in die Zutatenaufnahmeeinrichtung (31, 32, 33), wenn die berechnete Menge des zugeführten Fluids gleich einer vorgegebenen Nebenfluidzufuhrmenge ist oder sie überschreitet.

12. Verfahren nach Anspruch 10 oder 11, wobei das Einleiten des Fluids in die Zutatenaufnahmeeinrichtung (31, 32, 33) gestoppt wird, wenn eine gemessene Hauptfluidzufuhrzeit eine vorgegebene Hauptfluidzufuhrzeit erreicht und/oder wenn eine gemessene Nebenfluidzufuhrzeit eine vorgegebene Nebenfluidzufuhrzeit erreicht.

13. Verfahren nach Anspruch 12, wobei die vorgegebene Nebenfluidzufuhrzeit gleich oder größer als die vorgegebene Hauptfluidzufuhrzeit ist.

14. Verfahren nach einem der vorhergehenden Ansprüche 10 bis 13, das ferner Folgendes umfasst:
Erzeugen eines pulsierenden Fluidstroms durch die Zutatenaufnahmeeinrichtung (31, 32, 33) in der Hauptfluidzufuhroperation und/oder in der Nebenfluidzufuhroperation.

## Revendications

1. Appareil de fermentation et de maturation, comportant :
un réservoir (51) pour recevoir du fluide ;
un récipient de fermentation (12) formant un espace pour préparer une boisson ;
un récepteur d'ingrédients (31, 32, 33) pour recevoir des ingrédients pour préparer la boisson, le récepteur d'ingrédients (31, 32, 33) étant relié au réservoir (51) et au récipient de fermentation (12) ;
une pompe (52) disposée dans un premier canal (41) reliant le réservoir (51) au récepteur d'ingrédients (31, 32, 33) ;
une vanne principale (40) disposée dans un second canal (42) reliant le récepteur d'ingrédients (31, 32, 33) au récipient de fermentation (12) ; et
une commande (460) configurée pour commander la pompe (52),
dans lequel la commande (460) est configurée pour :
mettre en marche la pompe (52) pendant une opération d'alimentation primaire en fluide pour introduire du fluide du réservoir (51) dans le récepteur d'ingrédients (31, 32, 33) et pour introduire le fluide conjointement avec des ingrédients dans le récipient de fermentation (12) ;
arrêter la pompe (52) pendant une période d'inactivité prédéterminée ;
mettre en marche la pompe (52) pendant une opération d'alimentation secondaire en fluide pour introduire du fluide du réservoir (51) dans le récepteur d'ingrédients (31, 32, 33) et pour introduire le fluide en association avec des ingrédients restant dans le récepteur d'ingrédients (31, 32, 33) dans le récipient de fermentation (12) ; et
ouvrir la vanne principale (40) durant l'opération primaire d'alimentation en fluide et l'opération d'alimentation secondaire en fluide ;
**caractérisé en ce que** la commande (460) est configurée pour :
fermer la vanne principale (40) pendant la période d'inactivité, de telle sorte que du fluide introduit dans les récepteurs d'ingrédients (31, 32, 33) reste dans ceux-ci pendant la période d'inactivité.

2. Appareil de fermentation et de maturation selon la revendication 1, comportant en outre un débitmètre (56) disposé dans le premier canal (41),
dans lequel la commande (460) est configurée pour calculer une quantité de fluide fourni pendant l'opération d'alimentation primaire en fluide sur la base d'un débit détecté par le débitmètre (56) pendant l'opération d'alimentation primaire en fluide, et pour arrêter la pompe (52) lorsque la quantité calculée du fluide fourni est égale ou dépasse une quantité prédéterminée d'alimentation primaire en fluide, et/ou
dans lequel la commande (460) est configurée pour calculer la quantité de fluide fourni pendant l'opération d'alimentation secondaire en fluide sur la base d'un débit détecté par le débitmètre (56) durant l'opération d'alimentation secondaire en fluide, et pour arrêter la pompe (52) lorsque la quantité calculée du fluide fourni est égale ou dépasse une quantité prédéterminée d'alimentation secondaire en fluide.

3. Appareil de fermentation et de maturation selon la revendication 1 ou 2, dans lequel la quantité d'alimentation secondaire en fluide est égale ou supérieure à la quantité d'alimentation primaire en fluide.

4. Appareil de fermentation et de maturation selon l'une quelconque des revendications précédentes, dans lequel la commande (460) est configurée pour mesurer un temps d'alimentation primaire en fluide durant l'opération d'alimentation primaire en fluide en utilisant une minuterie et pour arrêter la pompe (52) lorsque le temps d'alimentation primaire en fluide mesuré atteint un temps prédéterminé d'alimentation primaire en fluide, et/ou
dans lequel la commande (460) est configurée pour mesurer un temps d'alimentation secondaire en fluide en utilisant la minuterie durant l'opération d'alimentation secondaire en fluide et pour arrêter la pompe (52) lorsque le temps mesuré d'alimentation secondaire en fluide atteint un temps prédéterminé d'alimentation secondaire en fluide.

5. Appareil de fermentation et de maturation selon la revendication 4, dans lequel le temps prédéterminé d'alimentation secondaire en fluide est égal ou supérieur au temps prédéterminé d'alimentation primaire en fluide.

6. Appareil de fermentation et de maturation selon l'une quelconque des revendications précédentes, dans lequel la période d'inactivité est de 10 minutes ou plus, ou dans lequel la période d'inactivité est entre 10 et 20 minutes.

7. Appareil de fermentation et de maturation selon l'une quelconque des revendications précédentes, dans lequel la période d'inactivité est basée sur un type de boisson en cours de préparation.

8. Appareil de fermentation et de maturation selon l'une quelconque des revendications précédentes, comportant en outre une vanne de régulation de débit (54) disposée dans le premier canal (41),
dans lequel pendant l'opération d'alimentation primaire en fluide et/ou pendant l'opération d'alimentation secondaire en fluide, la commande (460) est configurée pour commuter de manière répétée un degré d'ouverture de la vanne de régulation de débit (54) entre un premier niveau et un second niveau afin de générer un écoulement de fluide pulsé à travers le récepteur d'ingrédients (31, 32, 33).

9. Appareil de fermentation et de maturation selon l'une quelconque des revendications précédentes, dans lequel le récepteur d'ingrédients (31, 32, 33) est prévu en pluralité, et
dans lequel les récepteurs d'ingrédients (31, 32, 33) sont reliés les uns aux autres en série de telle sorte que du fluide s'écoule séquentiellement à travers les récepteurs d'ingrédients (31, 32, 33).

10. Procédé pour commander un appareil de fermentation et de maturation selon l'une quelconque des revendications précédentes, le procédé comportant :
une opération d'alimentation primaire en fluide pour introduire du fluide d'un réservoir (51) dans un récepteur d'ingrédients (31, 32, 33) et pour introduire le fluide conjointement avec des ingrédients dans un récipient de fermentation (12) ;
l'arrêt de l'introduction du fluide dans le récepteur d'ingrédients (31, 32, 33) pendant une période d'inactivité prédéterminée ; et
une opération d'alimentation secondaire en fluide pour introduire de nouveau du fluide du réservoir (51) dans le récepteur d'ingrédients (31, 32, 33) et pour introduire le fluide en association avec des ingrédients restant dans le récepteur d'ingrédients (31, 32, 33) dans le récipient de fermentation (12) ;
dans lequel la vanne principale (40) est ouverte durant l'opération d'alimentation primaire en fluide et l'opération d'alimentation secondaire en fluide ;
**caractérisé en ce que** la vanne principale (40) est fermée durant la période d'inactivité, de telle sorte que du fluide introduit dans les récepteurs d'ingrédients (31, 32, 33) reste dans ceux-ci durant la période d'inactivité.

11. Procédé selon la revendication 10, comportant en outre les étapes consistant à :
calculer une quantité de fluide fourni pendant l'opération d'alimentation primaire en fluide sur la base d'un débit détecté durant l'opération d'alimentation primaire en fluide, et arrêter d'introduire du fluide dans le récepteur d'ingrédients (31, 32, 33) lorsque la quantité calculée du fluide fourni est égale ou dépasse une quantité prédéterminée d'alimentation primaire en fluide, et/ou
calculer la quantité de fluide fourni pendant l'opération d'alimentation secondaire en fluide sur la base d'un débit détecté durant l'opération d'alimentation secondaire en fluide, et arrêter d'introduire du fluide dans le récepteur d'ingrédients (31, 32, 33) lorsque la quantité calculée du fluide fourni est égale ou dépasse une quantité prédéterminée d'alimentation secondaire en fluide.

12. Procédé selon la revendication 10 ou 11, dans lequel l'introduction de fluide dans le récepteur d'ingrédients (31, 32, 33) est arrêtée, lorsqu'un temps mesuré d'alimentation primaire en fluide atteint un temps prédéterminé d'alimentation primaire en fluide et/ou lorsqu'un temps mesuré d'alimentation secondaire en fluide atteint un temps prédéterminé d'alimentation secondaire en fluide.

13. Procédé selon la revendication 12, dans lequel le temps prédéterminé d'alimentation secondaire en fluide est égal ou supérieur au temps prédéterminé d'alimentation primaire en fluide.

14. Procédé selon l'une quelconque des revendications 10 à 13 précédentes, comportant en outre l'étape consistant à :
générer un écoulement de fluide pulsé à travers le récepteur d'ingrédients (31, 32, 33) pendant l'opération primaire d'alimentation en fluide et/ou pendant l'opération d'alimentation secondaire en fluide.
